(19) Europäisches Patentamt
European Patent Office
Office européen des brevets

(11) EP 4 514 064 A1

# (12) EUROPEAN PATENT APPLICATION

published in accordance with Art. 153(4) EPC

(43) Date of publication:
**26.02.2025 Bulletin 2025/09**

(21) Application number: **22938459.9**

(22) Date of filing: **19.04.2022**

(51) International Patent Classification (IPC):
***H04W 92/18*** *(2009.01)* ***H04W 76/14*** *(2018.01)*

(52) Cooperative Patent Classification (CPC):
**H04W 76/14; H04W 92/18**

(86) International application number:
**PCT/JP2022/018231**

(87) International publication number:
**WO 2023/203656 (26.10.2023 Gazette 2023/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
- **SHIBAIKE, Naoya**
  **Tokyo 100-6150 (JP)**
- **YOSHIOKA, Shohei**
  **Tokyo 100-6150 (JP)**
- **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

## (54) TERMINAL AND COMMUNICATION METHOD

(57) A terminal includes: a receiving unit configured to perform sensing in a resource pool that is set in an unlicensed band; a control unit configured to select a resource based on a result of the sensing and carry out a channel access procedure for a band in which the selected resource is included; and a transmitting unit configured to carry out a transmission to another terminal in the selected resource when the channel access procedure is carried out successfully, and the transmitting unit carries out the transmission in a gap symbol at an end of an earlier slot among at least two contiguous slots included in the selected resource.

FIG.16

PSCCH
PSSCH
GAP

SYMBOL



Processed by Luminess, 75001 PARIS (FR)

## Description

### Technical Field

The present invention relates to a terminal and a communication method in a wireless communication system.

### Background Art

In long term evolution (LTE) and a succeeding system of LTE (for example, LTE Advanced (LTE-A) and new radio (NR) (also referred to as 5G)), a device to device (D2D) technology in which terminals perform direct communication without passing through a base station has been discussed (for example, Non-Patent Document 1).

D2D reduces traffic between the terminal and the base station, and enables communication between the terminals even when the base station becomes incommunicable at the time of disaster or the like. Note that, in the 3rd generation partnership project (3GPP), D2D is referred to as "sidelink", but in the present specification, D2D, which is a more general term, is used. However, the term sidelink is also used as necessary in the description of the embodiment to be described later.

D2D communication is roughly divided into D2D discovery (also referred to as D2D discovery, D2D discovery) for discovering other communicable terminals and D2D communication (also referred to as D2D direct communication, D2D communication, device-to-device direct communication, and the like) for performing direct communication between the terminals. Hereinafter, the D2D communication, the D2D discovery, and the like are simply referred to as D2D when not particularly distinguished from each other. Further, a signal transmitted and received in D2D is referred to as a D2D signal. Various use cases of services related to vehicle to everything (V2X) in NR have been discussed (for example, Non-Patent Document 2).

In addition, in NR release 17, the use of a frequency band higher than that in a conventional release (for example, Non-Patent Document 3) is considered. For example, an applicable numerology including a sub-carrier spacing, a channel bandwidth, and the like, a design of a physical layer, a failure assumed in actual wireless communication, and the like in a frequency band from 52.6 GHz to 71 GHz have been considered.

### Citation List

### Non-Patent Documents

Non-Patent Document 1: 3GPP TS 38.211 V16.8.0 (2021-12)
Non-Patent Document 2: 3GPP TR 22.886 V15.1.0 (2017-03)
Non-Patent Document 3: 3GPP TS 38.306 V16.7.0 (2021-12)
Non-Patent Document 4: 3GPP TS 37.213 V16.7.0 (2021-12)


### Summary of Invention

### Technical Problem

In new frequency bands in which higher frequencies than in the past are used, unlicensed bands are defined. Various regulations are set forth for unlicensed bands, and, for example, LBT (Listen Before Talk) is performed when accessing a channel.

To perform multiple transmissions in an unlicensed band, in a case of these transmissions being contiguous in the direction of time, after LBT is successfully carried out once, it is then no longer necessary to perform LBT on a per transmission basis. However, in D2D communication, even when transmissions are performed in contiguous slots, a one-symbol non-transmission period for switching between transmission and reception is provided, and LBT may be required for the transmissions thereafter.

The present invention has been made in view of the foregoing, and aims to carry out terminal-to-terminal direct communication that is suitable for channel access procedures in unlicensed bands.

### Solution to Problem

According to the techniques disclosed herein, a terminal is provided. This terminal includes: a receiving unit configured to perform sensing in a resource pool that is set in an unlicensed band; a control unit configured to select a resource based on a result of the sensing and carry out a channel access procedure for a band in which the selected resource is included; and a transmitting unit configured to carry out a transmission to another terminal in the selected resource when the channel access procedure is carried out successfully, and the transmitting unit carries out the transmission in a gap symbol at an end of an earlier slot among at least two contiguous slots included in the selected resource.

Advantageous Effects of Invention

According to the techniques disclosed herein, terminal-to-terminal direct communication that is suitable for channel access procedures in unlicensed bands can be carried out.

Brief Description of Drawings

[Fig. 1] Fig. 1 is a diagram for explaining V2X;
[Fig. 2] Fig. 2 is a diagram that shows an example of a frequency range according to an embodiment of the present invention;
[Fig. 3] Fig. 3 is a diagram for explaining an example (1) of LBT;
[Fig. 4] Fig. 4 is a diagram for explaining an example (2) of LBT;
[Fig. 5] Fig. 5 is a diagram for explaining an example (3) of LBT;
[Fig. 6] Fig. 6 is a diagram that shows an example of multi-PUSCH scheduling;
[Fig. 7] Fig. 7 is a diagram that shows an example of LBT according to an embodiment of the present invention;
[Fig. 8] Fig. 8 is a diagram that shows examples of sidelink signals and channels according to an embodiment of the present invention;
[Fig. 9] Fig. 9 is a diagram that shows an example of a resource allocation mode 1 in sidelink according to an embodiment of the present invention;
[Fig. 10] Fig. 10 is a diagram that shows an example of sidelink-scheduling control information according to an embodiment of the present invention;
[Fig. 11] Fig. 11 is a diagram that shows an example (1) of a resource allocation mode 2 in sidelink according to an embodiment of the present invention;
[Fig. 12] Fig. 12 is a diagram that shows an example (2) of resource the allocation mode 2 in sidelink according to an embodiment of the present invention;
[Fig. 13] Fig. 13 is a flowchart for explaining an example of sidelink communication in an unlicensed band according to an embodiment of the present invention;
[Fig. 14] Fig. 14 is a diagram for explaining an example of contiguous transmissions in a sidelink;
[Fig. 15] Fig. 15 is a diagram for explaining an example (1) of contiguous transmissions according to an embodiment of the present invention;
[Fig. 16] Fig. 16 is a diagram for explaining an example (2) of contiguous transmissions according to an embodiment of the present invention;
[Fig. 17] Fig. 17 is a diagram showing an example functional structure of a base station 10 according to an embodiment of the present invention;
[Fig. 18] Fig. 18 is a diagram showing an example functional structure of a terminal 20 according to an embodiment of the present invention;
[Fig. 19] Fig. 19 is a diagram showing an example hardware structure of a base station 10 or a terminal 20 according to an embodiment of the present invention; and
[Fig. 20] Fig. 20 is a diagram showing an example structure of a vehicle 2001 according to an embodiment of the present invention.

Description of Embodiments

Hereinafter, an embodiment of the present invention will be described with reference to the drawings. Note that the embodiment described below is an example, and the embodiment to which the present invention is applied is not limited to the following embodiment.

In an operation of a wireless communication system of an embodiment of the present invention, an existing technology is appropriately used. The existing technology is, for example, existing LTE, but the present invention is not limited to the existing LTE. In addition, the term "LTE" used in the present specification has a broad meaning including LTE-Advanced, systems subsequent to LTE-Advanced (for example, NR), and a wireless local area network (LAN), unless otherwise specified.

In an embodiment of the present invention, a duplex system may be a time division duplex (TDD) system, a frequency division duplex (FDD) system, or other systems (for example, flexible duplex and the like).

In addition, in an embodiment of the present invention, meaning of a radio parameter or the like being "set (configured)" may indicate that a predetermined value is configured in advance (pre-configured), or that a radio parameter indicated by a base station 10 or a terminal 20 is configured.

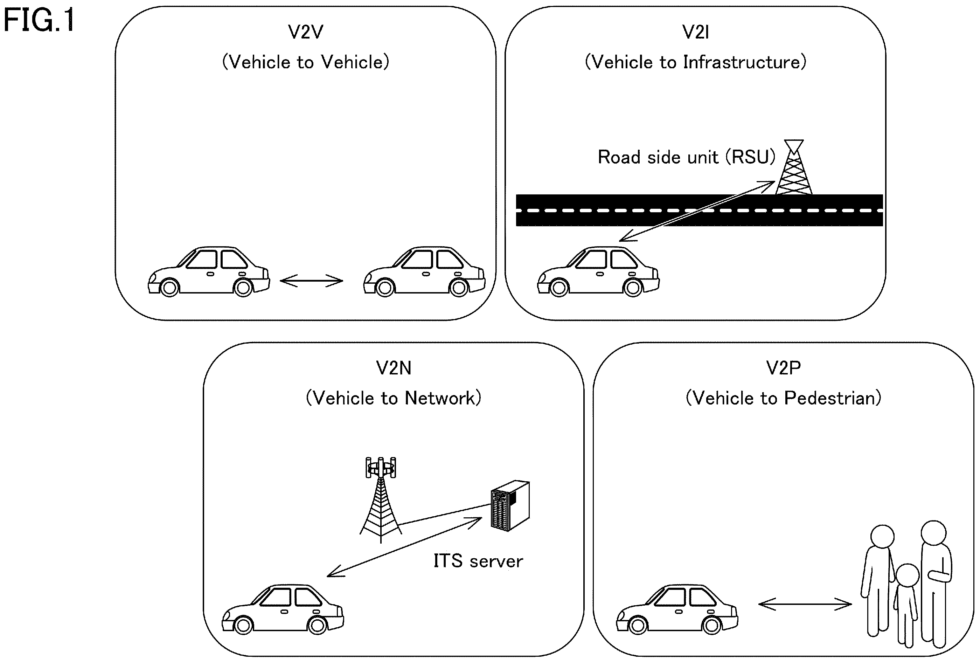

Fig. 1 is a diagram illustrating V2X. In 3GPP, realization of vehicle to everything (V2X) or enhanced V2X (eV2X) by extending a D2D function has been discussed, and technical specifications have been developed. As illustrated in Fig. 1, V2X is a part of intelligent transport systems (ITS), and is a generic name of vehicle to vehicle (V2V) meaning a communication form performed between vehicles, vehicle to infrastructure (V2I) meaning a communication form performed between a vehicle and a road-side unit (RSU) installed beside a road, vehicle to network (V2N) meaning a communication form performed between a vehicle and an ITS server, and vehicle to pedestrian (V2P) meaning a communication form performed between a vehicle and a mobile terminal possessed by a pedestrian.

In addition, in 3GPP, V2X using LTE or NR cellular communication and device-to-device communication has been discussed. V2X using cellular communication is also referred to as cellular V2X. In V2X of NR, studies to realize a large capacity, a low delay, high reliability, and quality of service (QoS) control are in progress.

Regarding V2X of LTE or NR, it is expected that the discussions will go beyond the development of the 3GPP technical specifications in the future. For example, it is expected that discussions will be held on achieving interoperability, reducing costs by implementation of an upper layer, a method of using a plurality of radio access technologies (RATs) in parallel or switching between the plurality of RATs, regulatory compliance in each country, and a method of acquiring, distributing, managing a database of, and using data of an LTE or NR V2X platform.

In the embodiment of the present invention, a use case in which a communication device is mounted on a vehicle is mainly assumed, but the embodiment of the present invention is not limited to such use case. For example, the communication device may be a terminal carried by a person, the communication device may be a device mounted on a drone or an aircraft, or the communication device may be a base station, an RSU, a relay station (a relay node), a terminal having a scheduling capability, or the like.

Note that sidelink (SL) may be distinguished from uplink (UL) or downlink (DL) based on either or a combination of the following 1) to 4). Further, SL may have another name.

1) Resource allocation in time domain
2) Resource allocation in frequency domain
3) Synchronization signal to be referred to (including sidelink synchronization signal (SLSS))
4) Reference signal used for path loss measurement for transmission power control

In addition, regarding orthogonal frequency division multiplexing (OFDM) of SL or UL, any one of cyclic-prefix OFDM (CP-OFDM), discrete Fourier transform-spread-OFDM (DFT-S-OFDM), OFDM without transform precoding, and OFDM with transform precoding may be applied.

In the SL of LTE, Mode 3 and Mode 4 are defined regarding resource allocation of the SL to the terminal 20. In Mode 3, transmission resources are dynamically allocated by downlink control information (DCI) transmitted from the base station 10 to the terminal 20. In Mode 3, semi persistent scheduling (SPS) is also possible. In Mode 4, the terminal 20 autonomously selects a transmission resource from a resource pool.

A slot in the embodiment of the present invention may be replaced with a symbol, a mini-slot, a sub-frame, a radio frame, or a transmission time interval (TTI). In addition, a cell in the embodiment of the present invention may be replaced with a cell group, a carrier component, a BWP, a resource pool, a resource, a radio access technology (RAT), a system (including a wireless LAN), or the like.

Note that, in the embodiment of the present invention, the terminal 20 is not limited to a V2X terminal, and may be any type of terminal that performs D2D communication. For example, the terminal 20 may be a terminal such as a smartphone carried by a user, or may be an Internet of Things (IoT) device such as a smart meter.

3GPP Release 16 or Release 17 sidelink is specified in the technical specifications for 1) and 2) described below.

1) Environment in which only 3GPP terminals exist in an intelligent transport systems (ITS) band
2) Environment in which UL resources are available to SL in license bands of frequency range 1 (FR1) and frequency range 2 (FR2) defined in NR

It has been discussed that an unlicensed band will be a new target of sidelink after 3GPP Release 18. For example, the newly targeted unlicensed band is an unlicensed band such as a 5 GHz to 7 GHz band or a 60 GHz band.

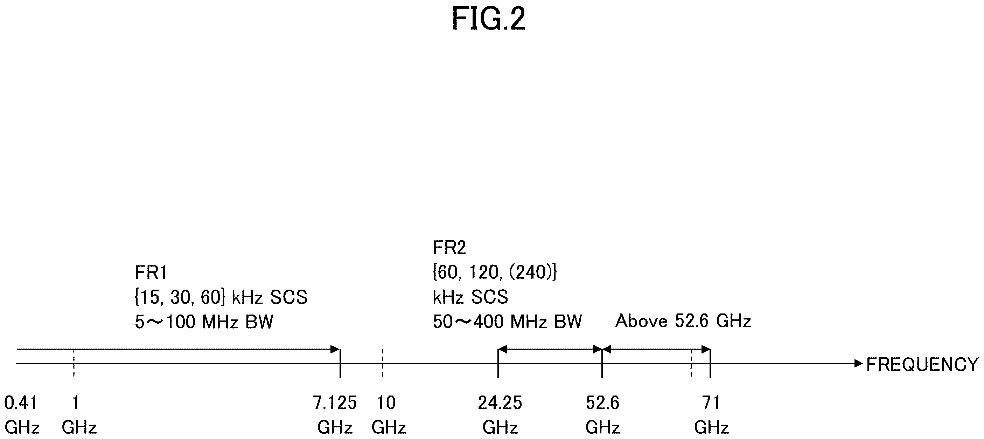

Fig. 2 is a diagram illustrating an example of a frequency range according to the embodiment of the present invention. In the NR specification of 3GPP Release 17, for example, an operation in a frequency band of 52.6 GHz or more is being discussed. Note that, as illustrated in Fig. 2, FR1 defined for the current operation is a frequency band from 410 MHz to 7.125 GHz, the sub carrier spacing (SCS) is 15, 30, or 60 kHz, and the bandwidth is from 5 MHz to 100 MHz. FR2 is a frequency band from 24.25 GHz to 52.6 GHz, the SCS is 60, 120, or 240 kHz, and the bandwidth is 50 MHz to 400 MHz. For example, a newly operated frequency band may be expected to be from 52.6 GHz to 71 GHz.

For example, as an example of the unlicensed band in the 5 GHz to 7 GHz band, 5.15 GHz to 5.35 GHz, 5.47 GHz to 5.725 GHz, 5.925 GHz or more, and the like are expected.

For example, as an example of the unlicensed band in the 60 GHz band, 59 GHz to 66 GHz, 57 GHz to 64 GHz or 66 GHz, 59.4 GHz to 62.9 GHz, and the like are expected.

In the unlicensed band, various regulations are set in order not to affect other systems or other devices.

For example, listen before talk (LBT) is executed for channel access in the 5 GHz to 7 GHz band. The base station 10 or the terminal 20 performs power detection in a predetermined period immediately before performing transmission, and stops transmission when the power exceeds a certain value, that is, when detecting transmission of another device. In addition, a maximum channel occupancy time (MCOT) is defined. The MCOT is a maximum time period during which transmission is allowed to be continued when the transmission is started after LBT, and is, for example, 4 ms in Japan. In addition, as an occupied channel bandwidth (OCB) requirement, X% or more of the band needs to be used when transmission is performed using a certain carrier bandwidth. For example, in Europe, it is required to use 80% to 100% in a nominal channel bandwidth (NCB). The OCB requirement is intended to ensure that power detection of channel access is performed correctly. Regarding maximum transmission power and maximum power spectral density, it is specified that transmission is performed at predetermined transmission power or less. For example, in Europe, 23 dBm is the maximum transmission power in a 5,150 MHz to 5,350 MHz band. In addition, for example, in Europe, the maximum power spectral density is 10 dBm/MHz in the 5,150 MHz to 5,350 MHz band.

For example, LBT is executed at the time of channel access in the 60 GHz band. The base station 10 or the terminal 20 performs power detection in a predetermined period immediately before performing transmission, and stops transmission when the power exceeds a certain value, that is, when detecting transmission of another device. Regarding the maximum transmission power and the maximum power spectral density, it is specified that transmission is performed at predetermined transmission power or less. It is also specified to have a capability to meet the OCB requirement.

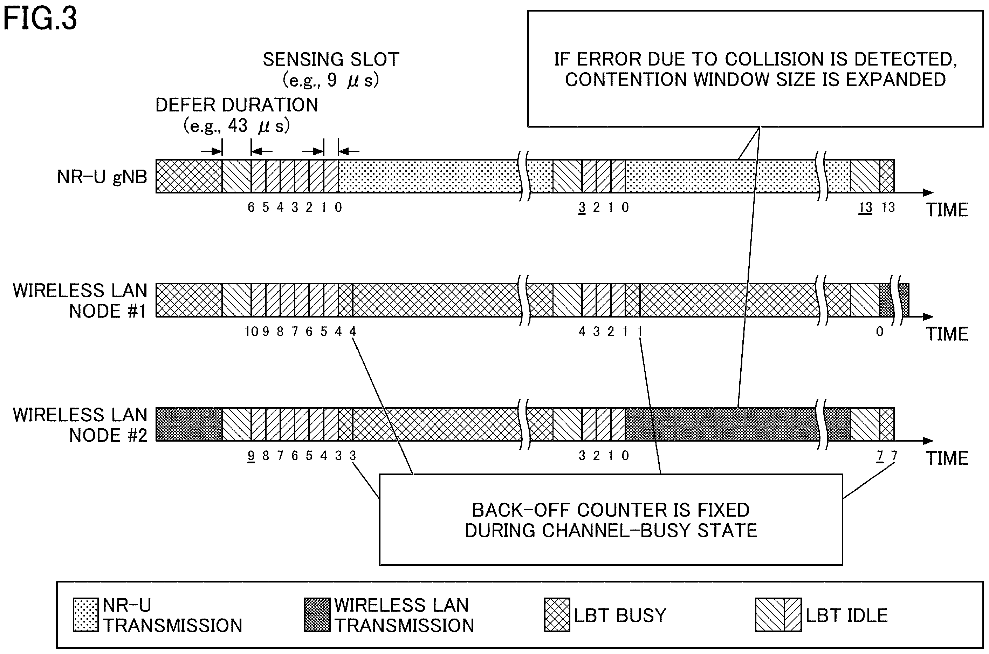

Fig. 3 is a diagram illustrating an example of a wireless LAN channel. A nominal center frequency $f_c$ of the wireless LAN channel in the 5 GHz band may be specified by the following formula, as shown in Fig. 3.

$f_c = 5160 + (g \times 20)$ MHz, where $0 \leq g \leq 9$ or $16 \leq g \leq 27$

The nominal channel bandwidth is a maximum bandwidth including a guard band allocated to a single channel, and may be 20 MHz. The bandwidth allocated to a single channel to be operated may be an LBT bandwidth.

Note that an occupied channel bandwidth (OCB) may be defined as a bandwidth including 99% of signal power.

In NR, four types of channel access procedures described below are defined based on a difference in behavior of time reporting of LBT (period during which sensing is performed).

Type 1) Variable time sensing is executed before transmission. Type 1 is also referred to as category-4 LBT.

Type 2A) 25 us sensing is executed before transmission. Type 2A is also referred to as category-2 LBT.

Type 2B) 16 us sensing is executed before transmission. Type 2B is also referred to as category-2 LBT.

Type 2C) Transmission starts without performing LBT. Type 2C is similar to transmission in the licensed band.

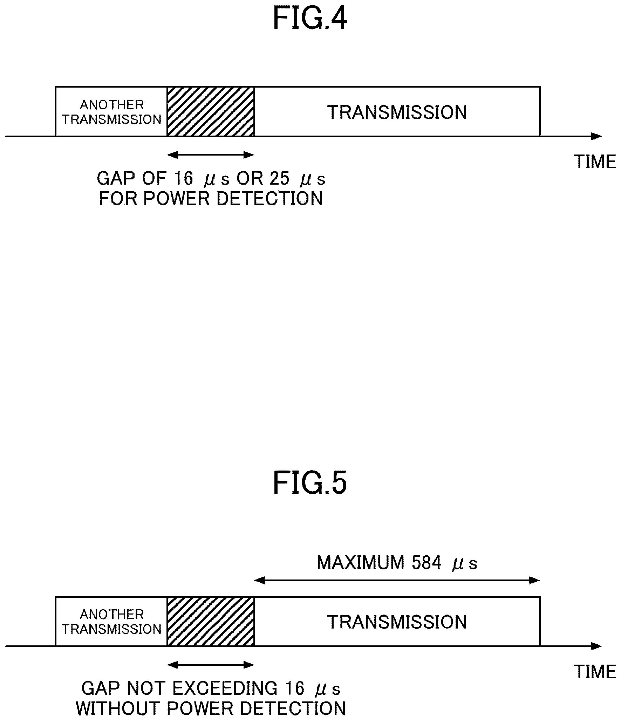

Fig. 4 is a diagram illustrating an example (1) of LBT. Fig. 4 is an example of a channel access procedure of Type 1. Type 1 is further classified into four classes indicating a channel access priority class based on a difference in sensing length. Sensing is executed in the following two periods of time.

A first period is a prioritization period or a defer duration and has a length of $16 + 9 \times m_p$ [ps]. A fixed value of $m_p$ is defined for each channel access priority class.

A second period is a back-off procedure and has a length of $9 \times N$[ps]. The value of N is randomly determined from a certain range (refer to Non-Patent Document 4).

In the above description, the 9 us sensing period may be referred to as a sensing slot period.

In the example of Fig. 4, $m_p = 3$, and a defer duration is 43 us. As illustrated in Fig. 4, a back-off counter is fixed during the channel-busy state. In addition, as illustrated in Fig. 4, when the transmission of NR-U gNB and the transmission of wireless LAN node #2 collide with each other and an error is detected, a contention window size is increased from 3 to 13 in the NR-U gNB.

Fig. 4 is a diagram illustrating an example (2) of LBT. Fig. 4 is an example of the channel access procedure of Type 2A or Type 2B without random back-off. A gap for performing power detection of 25 us for Type 2A or 16 us for Type 2B is configured before transmission.

Fig. 5 is a diagram illustrating an example (3) of LBT. Fig. 5 is an example of the channel access procedure of Type 2C. As illustrated in Fig. 5, no power detection is performed before transmission, and after a gap not exceeding 16 us, transmission is performed immediately. The transmission period may be up to 584 us.

A DL transmission burst is defined as a set of transmissions from an eNB or gNB, without a gap longer than 16 us therein. If a gap exceeding a length determined to divide DL transmission bursts is present, then the multiple transmissions from the eNB or gNB are separated. The eNB or gNB may perform transmissions after the gap in the DL transmission burst without performing sensing to determine the availability of the corresponding channel.

A UL transmission burst is defined as a set of transmissions from a UE, without a gap longer than 16 us therein. If a gap longer than 16 us divides UL transmission bursts, then the multiple transmissions from the UE are separated. The UE may perform transmissions after the gap in the UL transmission burst without performing sensing to determine the availability of the corresponding channel.

It then follows that multiple transmissions not including a gap longer than 16 us are seen as one transmission burst, and LBT needs to be performed per transmission burst.

The conditions for the use of channel access procedures other than type 1 include the following (1) to (4):

(1) Type 2A in DL (with 25-us-fixed LBT)
Transmissions initiated by the gNB, constituting a discovery burst itself or a discovery burst multiplexed with non-unicast information. The duration of transmission is 1 ms at a maximum, and the duty cycle of the discovery burst is 1/20 at a maximum.

(2) Type 2B in DL (with 16 us-fixed LBT)
Transmissions performed by the gNB on a shared channel after a 16-μs gap following the end of transmissions by the UE.

(3) Type 2C in DL (without LBT)
Transmissions performed by the gNB on a shared channel after a 16-μs gap following the end of transmissions by the UE.

(4) In UL, the channel access type indicated by the gNB is used, or type 1 channel access procedures are used. In a dynamic grant (DG)-PUSCH, the type specified by scheduling DCI is used. The channel access priority class (CAPC) will be described later. Note that CAPC is 1 when no UL-SCH is involved. In a configured grant (CG)-PUSCH, type 1 channel access procedures are used. CAPC will be described later. For the transmission at the beginning of occupancy of the PUSCH channel, not involving user plane data, in PRACH or random access procedures, type 1 channel access procedures with a CAPC of 1 are used. For an SRS without a PUSCH, type 1 channel access procedures with a CAPC of 1 are used. When an SRS is triggered by a DL-assigning DCI that does not trigger a PUCCH, type 2 channel access procedures are used. When DCI assigns a PUSCH and an SRS, or a PUCCH and an SRS, which are transmitted in a discontinuous manner, the channel access procedures indicated for the first UL transmission are used. If the channel continues being idle after the first transmission stops, type 2 or type 2A channel access procedures without CP extension are used for subsequent transmissions. If the channel is no longer idle after the first transmission stops, type 1 channel access procedures without CP extension are used. For a PUCCH or a PUSCH that does not accompany a UL-SCH, type 1 channel access procedures with a CAPC of 1 are used, and type 2 channel access procedures are used if indicated in DCI. Note that there are the following exceptions (1) and (2):

(1) When group common DCI is received. When the remaining time and the position in the frequency domain of a COT gained by the gNB are indicated in common DCI format 2_0, it is possible to switch from type 1 channel access procedures to type 2A channel access procedures.

(2) When contiguous UL transmissions are performed. If channel access using type 1/2/2A channel access procedures for a preceding transmission fails, the same channel access procedures are used for the following transmission. For example, if type 2B channel access procedures for a preceding transmission fail, type 2A channel access procedures are used. In the event one grant schedules PUSCH/SRS transmissions, CP extension is not applied to the later transmission. If channel access procedures for the preceding transmission among contiguous transmissions are carried out successfully, LBT need not be performed for the following transmission. In the event contiguous transmissions including a CG-PUSCH, a periodic PUCCH (P-PUCCH), or a periodic SRS (P-SRS), if type 1 channel access procedures for the first transmission fail, type 1 channel access procedures must be run for the following transmission. If type 1 channel access procedures for the first transmission are carried out successfully, LBT need not be performed for the following transmission.

Assuming that the UE already has type 1 channel access procedures that are in progress when type 1 channel access procedures are indicated for a DG-PUSCH or a PUCCH, the DG-PUSCH or the PUCCH can be transmitted during the COT in the ongoing type 1 channel access procedures if the CAPC value in the ongoing type 1 channel access procedures is greater than or equal to the CAPC value for the new PUSCH/PUCCH. In other words, there is no need to cause the type 1 channel access procedures to be run.

On the other hand, if the CAPC value in the ongoing type 1 channel access procedures is smaller than the CAPC value for the new PUSCH/PUCCH, the ongoing type 1 channel access procedures must be interrupted and type 1 channel access procedures must be carried out based on the newly indicated CAPC value.

Note that the PUCCH can always be transmitted during the COT of ongoing type 1 channel access procedures, and so there is no need to cause new type 1 channel access procedures to be run.

The CAPCs of radio bearers and MAC-CEs can be configured to be fixed or variable. The padding BSR and recommended-bit-rate MAC-CEs are always set to the lowest priority. SRB0, SRB1, SRB3 and other MAC-CEs are always set to the highest priority. The priority of SRB2 and DRBs can be set by the gNB.

When selecting a DRB's CAPC, the gNB takes into account the 5QIs of all QoS flows (5G QoS Identifiers) multiplexed over that DRB, considering the fairness between different types of traffic types and between transmissions. Table 1 below shows the mapping of CAPCs to be used for standardized 5QIs. Note that smaller CAPC values indicate higher priorities.

[Table 1]

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: Smaller CAPC values indicate higher priorities. | |

The CAPCs shown in Table 1 are used for QoS flows. A QoS flow corresponding to a non-standardized 5QI (that is, an operator-specific 5QI) should use the CAPC of a standardized 5QI that matches the QoS characteristics of the non-standardized 5QI.

When performing type 1 LBT for transmitting a UL transport block with no CAPC indicated by DCI, the UE selects the CAPC as follows:

If the transport block contains only MAC-CEs, the highest CAPC among the CAPCs of these MAC-CEs is used. If the transport block contains CCCH-SDUs, the highest CAPC is used. Alternatively, if the transport block contains DCCH-SCUs, the highest CAPC among the CAPCs of the DCCHs is used. Alternatively, the lowest CAPC among the CAPCs of logical channels with MAC-SDUs multiplexed over the transport block may be used.

As mentioned earlier, the sensing period in the back-off procedure during type 1 channel access procedures is randomly selected from a specific range {0 ... CW}. The CW value is selected from the range from CWmin (minimum CW) to CWmax (maximum CW) in Table 2 below, based on the CWS (Contention Window Size) adjustment procedure defined in Non-Patent Document 4.

[Table 2]

| Class # | 1 $m_p$ | Minimum CW | Maximum CW | Maximum COT | Minimum defer duration in total | Maximum defer duration in total |
|---|---|---|---|---|---|---|
| 1 | 1 | 3 | 7 | 2 ms | 52$\mu$s | 88 $\mu$s |
| 2 | 1 | 7 | 15 | 3/4 ms | 88 $\mu$s | 160 $\mu$s |
| 3 | 3 | 15 | 63/1023 | 8 ms | 178 $\mu$s | 610/9250 $\mu$s |
| 4 | 7 | 15 | 1023 | 8ms | 214 $\mu$s | 9286 $\mu$s |

As shown in Table 2, the minimum CW and the maximum CW are set to different values per channel access priority class. In higher class numbers, the minimum CW and maximum CW are set to larger values. Therefore, the higher the class number, the lower the possibility of collisions with other devices and the longer the time required for channel access procedures. On the other hand, the lower the class number, the higher the possibility of collisions with other devices and the shorter the time required for channel access procedures.

The maximum COT shown in Table 2 is the maximum channel occupancy time.

Note that the expression of "a/b" in Table 2 means that "a" is the value for the gNB and "b" is the value for the UE.

In the CWS adjustment procedure, the initial CW value is the minimum CW. The CW value is incremented based on the decoded results from past PDSCH transmissions or PUSCH transmissions.

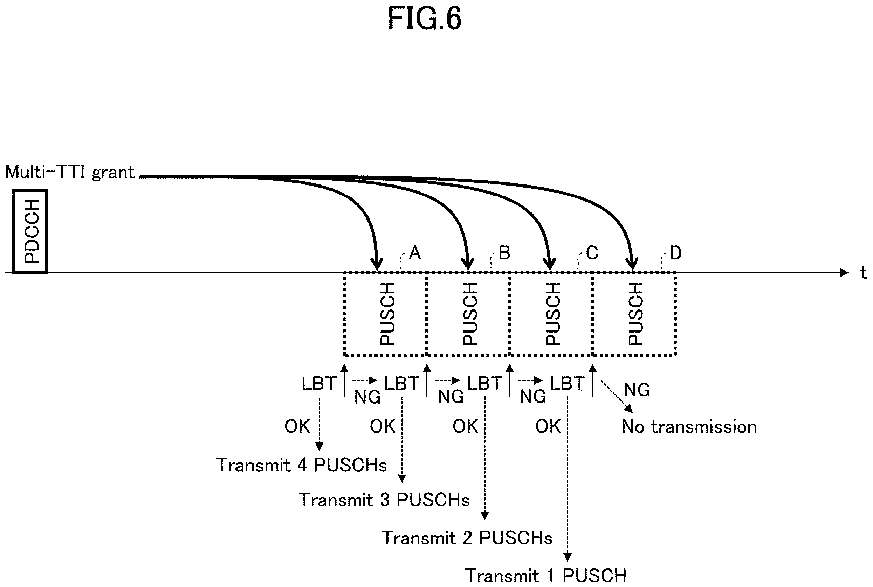

Fig. 6 shows an example of multi-PUSCH scheduling. In Release 16NR-U, it is assumed that a multi-TTI (Transmission Time Interval) grant is used to schedule multiple PUSCHs over multiple slots/mini-slots with one DCI (Downlink Control Information). Note that "scheduling (or to schedule) and "to assign/allocate" may be used interchangeably.

With a multi-TTI grant, multiple contiguous PUSCHs that transmit separate TBs (Transport Blocks) are scheduled. One TB is mapped to one slot or one mini-slot and transmitted on one PUSCH. One PUSCH that transmits one TB is assigned one HARQ (Hybrid Automatic Repeat reQuest) process.

For multiple PUSCHs scheduled by one DCI, an NDI (New Data Indicator) and an RV (Redundancy Version) are signaled for each PUSCH, in one DCI. Also, the HARQ process ID indicated in that DCI is applied to the first PUSCH that is scheduled, and, as for the HARQ process IDs of subsequent PUSCHs, a value incremented by one in the order of the PUSCHs is applied to each PUSCH.

In the example of Fig. 3, four slots of PUSCH are scheduled by a multi-TTI grant.

The user terminal 20 performs LBT before the slot labeled "A," in which the first PUSCH is scheduled. If the result of that LBT is OK, the user terminal 20 transmits data in four contiguous PUSCHs. If the result of the first LBT is NG, LBT is performed before the slot labeled "B," in which a PUSCH is scheduled, and, if the result of this LBT is OK, the user terminal 20 transmits data in three contiguous PUSCHs. The same process is performed thereafter. If LBT is performed before the slot labeled "D," in which the last PUSCH is scheduled and its result is NG, no transmission is performed.

For example, PUSCH scheduling may be configured such that one DCI supports multiple slots or mini-slots including multiple contiguous PUSCHs that may include multiple separated TBs. Also, for example, DCI signaling multiple PUSCHs may include the NDIs and RVs. Also, for example, CBG (Code Block Group)-based retransmission may be supported in multiple PUSCH scheduling, and may be signaled for every one or more PUSCHs to be retransmitted, for every PUSCH, or for every fixed number of PUSCHs, in a field in DCI. Also, for example, the HARQ process ID signaled in DCI may be applied to the first-scheduled PUSCH and may be incremented by one in every following PUSCH.

Also, for example, the time-domain resource allocation for PUSCH scheduling may be expanded. For example, the range of the starting symbol’s position and the ending symbol’s position may be expanded, consecutive time-domain resource allocation may be expanded, multiple PUSCHs may be positioned in the leading slot, multiple starting symbol positions may be supported in a terminal-initiated COT, and so forth.

As described above, multiple PUSCH transmissions can be scheduled, in the direction of time, by one UL grant (PDCCH). Channel access procedures using LBT can be run multiple times. Also, once channel access is successfully gained, the subsequent PUSCH transmissions are carried out as contiguous transmissions in the direction of time, which makes LBT unnecessary.

Maximum 8 SLIVs are indicated by one TDRA row, so that maximum 8 PUSCHs can be allocated. Also, in Release 16, contiguous allocation is always used.

Now, the resource pool in sidelink will be described. Table 3 shows a part of the resource pool configuration for sidelink.

[Table 3]

| SCS [kHz] | Minimum subchannel size [MHz] | Maximum subchannel size [MHz] | Maximum configurable bandwidth [MHz] |
|---|---|---|---|
| 15 | 1.8 | 18 | 486 |
| 30 | 3.6 | 36 | 972 |
| 60 | 7.2 | 72 | 1944 |

As shown in Table 3, the minimum sub-channel size, the maximum sub-channel size, and the maximum configurable bandwidth are defined for each SCS. When the size of the frequency domain of a sub-channel is indicated by the number of PRBs, {10, 12, 15, 20, 25, 50, 75, 100} may be available to be configured. The number of sub-channels in the resource pool may be configurable to be 1 to 27.

As a limitation of sub-channels in the resource pool, the resource pool includes only consecutive RBs and includes only consecutive sub-channels.

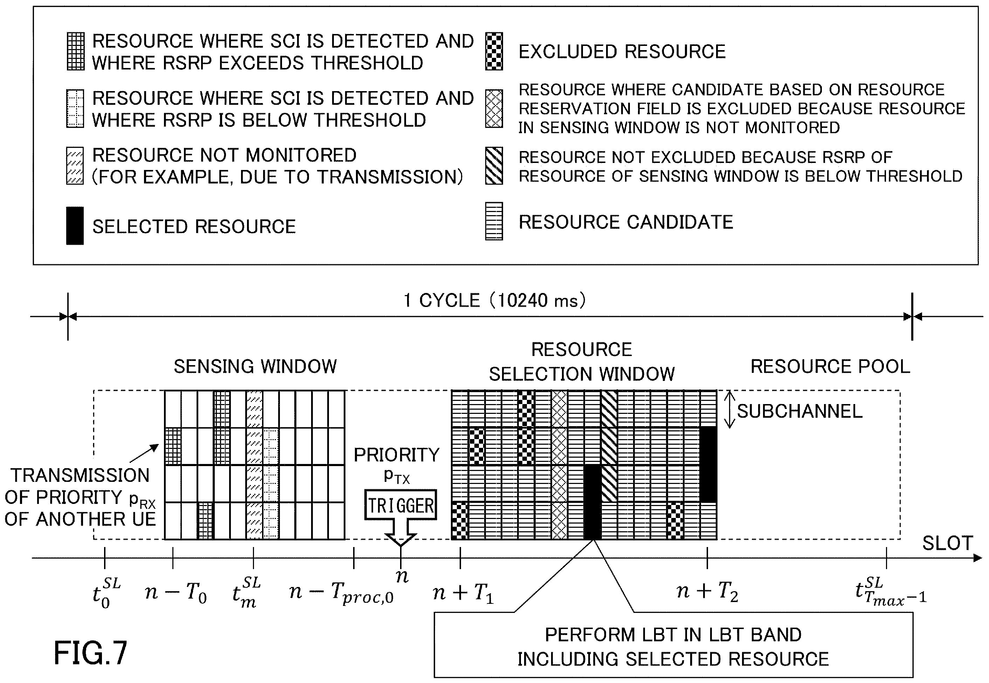

Fig. 7 is a diagram illustrating an example of LBT according to the embodiment of the present invention. In a resource allocation mode 2, the terminal 20 selects a resource and performs transmission. As illustrated in Fig. 7, the terminal 20 executes sensing with a sensing window in the resource pool. By performing sensing, the terminal 20 receives a resource reservation field or a resource assignment field included in sidelink control information (SCI) transmitted from another terminal 20, and identifies, based on the field, available resource candidates in a resource selection window in the resource pool. Subsequently, the terminal 20 randomly selects a resource from the available resource candidates.

Furthermore, as illustrated in Fig. 7, the configuration of the resource pool may have a period. For example, the period may be a period of 10,240 milliseconds. Fig. 7 illustrates an example in which slots $t_0^{SL}$ to $t_{Tmax-1}^{SL}$ are configured as a resource pool. A region of the resource pool in each period may be configured by, for example, a bitmap.

Furthermore, as illustrated in Fig. 7, it is assumed that a transmission trigger in the terminal 20 occurs in the slot n, and the priority of the transmission is $p_{TX}$. The terminal 20 can detect, for example, that another terminal 20 is performing transmission of a priority $p_{RX}$ in the sensing window from the slot n-$T_0$ to the slot immediately before the slot n-$T_{proc,0}$. When an SCI is detected in the sensing window and reference signal received power (RSRP) exceeds a threshold value, a resource in a resource selection window corresponding to the SCI is excluded. Further, when an SCI is detected in the sensing window and the RSRP is less than the threshold value, the resource in the resource selection window corresponding to the SCI is not excluded. The threshold value may be, for example, a threshold value $Th_{pTX,pRX}$ configured or defined for each resource in the sensing window based on the priority $p_{TX}$ and the priority $p_{RX}$.

Furthermore, a resource in a resource selection window, which is a candidate for resource reservation information, corresponding to a resource in a sensing window such as a slot $t_m^{SL}$ illustrated in Fig. 7 which was not monitored due to the transmission, is excluded.

In a resource selection window from a slot n+$T_1$ to a slot n+$T_2$, as illustrated in Fig. 7, resources obtained by excluding a resource identified to be occupied by another UE become available resource candidates. Assuming that a set of available resource candidates is defined as $S_A$, when $S_A$ is less than 20% of the resource selection window, the threshold value $Th_{pTX,pRX}$ configured for each resource of the sensing window may be increased by 3 dB, and resource identification may be executed again. That is, by increasing the threshold value $Th_{pTX,pRX}$ and executing the resource identification again, resources which are not excluded because the RSRP is less than the threshold value may be increased, and the set $S_A$ of resource candidates may become 20% or more of the resource selection window. When $S_A$ is less than 20% of the resource selection window, the operation of increasing the threshold value $Th_{pTX,pRX}$ configured for each resource of the sensing window by 3 dB and of executing the resource identification again may be repeatedly performed.

A lower layer of the terminal 20 may report $S_A$ to an upper layer thereof. The upper layer of the terminal 20 may execute random selection on $S_A$ to determine a resource to be used. The terminal 20 may execute sidelink transmission by using the determined resource. For example, the upper layer may be a MAC layer, and the lower layer may be a PHY layer or a physical layer.

Although the operation of the transmission side terminal 20 is described in Fig. 7, the reception side terminal 20 may detect data transmission from another terminal 20 based on a result of sensing or partial sensing and may receive data from the another terminal 20.

Further, as a procedure from resource allocation to actual transmission in the sidelink, the following two steps may be executed.

First step) As illustrated in Fig. 7, the terminal 20 executes a sensing and resource selection procedure in a 3GPP Release 16/17 sidelink.

Second step) The terminal 20 executes the above-described channel access procedure (3GPP Release 16 NR-U/ETSI broadband radio access networks (BRAN)) on a band corresponding to the resource selected in the first step).

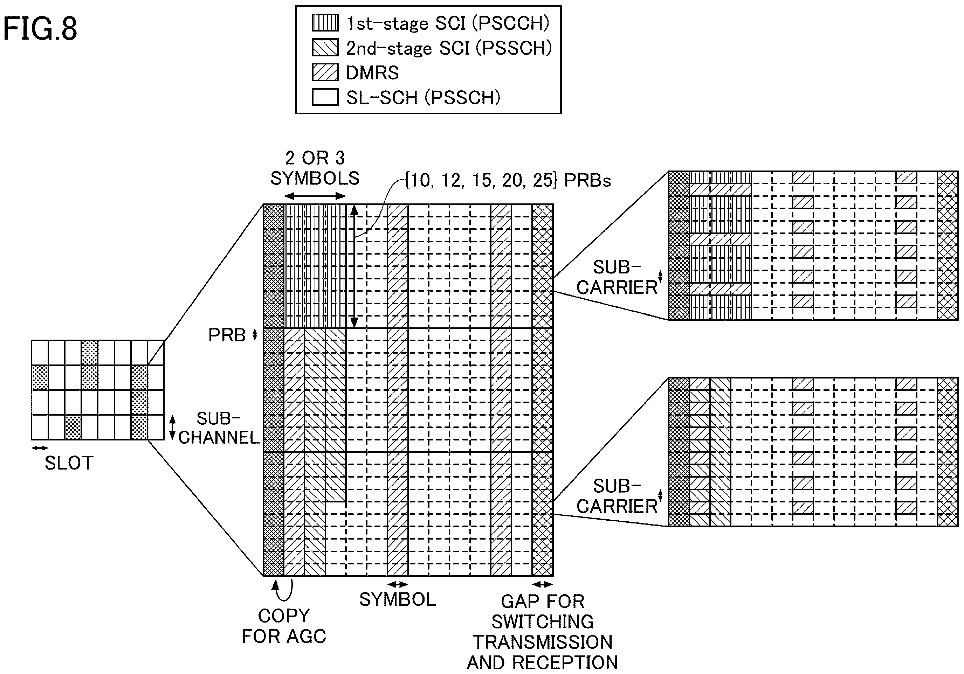

Fig. 8 is a diagram illustrating an example of a sidelink according to the embodiment of the present invention. As illustrated in Fig. 8, a control signal and a data signal of the sidelink may be configured. Fig. 8 illustrates an example in which three sub-channels are used for transmission of PSCCH and PSSCH. As illustrated in Fig. 8, SCI is separated into a first stage SCI and a second stage SCI. The first stage SCI is transmitted via PSCCH, and the second stage SCI is transmitted via PSSCH. As illustrated in Fig. 8, PSCCH carrying the first stage SCI does not exceed one sub-channel width and includes {10, 12, 15, 20, 25} PRBs and 2 or 3 symbols.

Note that the second symbol is copied to the first symbol for AGC. The last symbol is used as a gap for switching between transmission and reception.

Table 4 shows a 1st-stage SCI format 1-A in a 2-stage SCI format.

[Table 4]

| **1 st-stage SCI: SCI format 1-A** | |
|---|---|
| **Field** | **Number of bits** |
| Priority | 3 |
| Resource reservation period | A* or 0 |
| Time resource assignment | 5 or 9 |
| Frequency resource assignment | B* or C* |
| DM-RS pattern | 0 or 1 or 2 |
| 2nd stage SCI format | 2 |
| Beta offset indicator | 2 |
| Number of DM-RS ports | 1 |

(continued)

| 1 st-stage SCI: SCI format 1-A | |
|---|---|
| Field | Number of bits |
| MCS | 5 |
| Additional MCS table | 2 or 0 |
| PSFCH overhead | 1 or 0 |
| Reserved | 2 to 4 |

As shown in Table 4, the bit duration of the priority field is 3 bits. The bit duration of the resource reservation period field is h or 0 bits.

[Mathematical expression 1]

$$A^* = \lceil \log_2 N_{\text{reservPeriod}} \rceil$$

Note that $N_{reservPeriod}$ in the mathematical expression 1 is the reservation period. The bit duration of the time resource assignment field is 5 or 9 bits. The bit duration of the frequency resource assignment field is determined by the following mathematical expression 2 or mathematical expression 3.

[Mathematical expression 2]

$$B^* = \left\lceil \log_2 \left( \frac{N_{\text{subChannel}}^{SL} \left( N_{\text{subChannel}}^{SL} + 1 \right)}{2} \right) \right\rceil$$

[Mathematical expression 3]

$$C^* = \left\lceil \log_2 \left( \frac{N_{\text{subChannel}}^{SL} \left( N_{\text{subChannel}}^{SL} + 1 \right) \left( 2N_{\text{subChannel}}^{SL} + 1 \right)}{6} \right) \right\rceil$$

$N_{subChannel}^{SL}$ in the mathematical expression 2 and the mathematical expression 3 is the number of sub-channels. The bit duration of the DM-RS pattern field is 0, 1, or 2 bits. The bit duration of the 2nd-stage SCI format field is 2 bits. The bit duration of the Beta offset indicator field is 2 bits. The bit duration of the Number-of-DM-RS-ports field is 1 bit. The bit duration of the MCS field is 5 bits. The bit duration of the additional MCS field is 2 or 0 bits. The bit duration of the PSFCH overhead field is 1 or 0 bits. The bit duration of the reserved field is 2 or 4 bits.

Table 5 shows the 2nd-stage SCI format 2-A. The 2nd-stage SCI format 2-A can be received by decoding the 1st-stage SCI.

[Table 5]

| 2nd-stage SCI: SCI format 2-A | |
|---|---|
| Field | Number of bits |
| L1 source ID | 8 |
| L1 destination ID | 16 |
| HARQ process ID | 4 |
| New data indicator | 1 |
| Redundancy version | 2 |

(continued)

| 2nd-stage SCI: SCI format 2-A | |
|---|---|
| Field | Number of bits |
| HARQ feedback enabled/disabled | 1 |
| Cast type | 2 |
| CSI request | 1 |

As shown in Table 5, the bit duration of the LI source ID field is 8 bits. The bit duration of the L1 destination ID field is 16 bits. The bit duration of the HARQ process ID field is 4 bits. The bit duration of the new data indicator field is 1 bit. The bit duration of the redundancy version field is 2 bits. The bit duration of the HARQ feedback enabled/disabled field is 1 bit. The bit duration of the cast type field is 2 bits. The bit duration of the CSI request field is 1 bit.

Table 6 shows the 2nd-stage SCI format 2-B. The 2nd-stage SCI format 2-B can be received by decoding the 1st-stage SCI. The 2nd-stage SCI format 2-B is used for groupcast.

[Table 6]

| 2nd-stage SCI: SCI format 2-B | |
|---|---|
| Field | Number of bits |
| L1 source ID | 8 |
| L1 destination ID | 16 |
| HARQ process ID | 4 |
| New data indicator | 1 |
| Redundancy version | 2 |
| HARQ feedback enabled/disabled | 1 |
| Zone ID | 12 |
| Communication range requirement | 4 |

As shown in Table 6, the bit duration of the LI source ID field is 8 bits. The bit duration of the L1 destination ID field is 16 bits. The bit duration of the HARQ process ID field is 4 bits. The bit duration of the new data indicator field is 1 bit. The bit duration of the redundancy version field is 2 bits. The bit duration of the HARQ feedback enabled/disabled field is 1 bit. The bit duration of the zone ID field is 12 bits. The bit duration of the communication range requirement field is 4 bits.

In 3GPP Release 16 and Release 17, two resource allocation modes are defined for sidelink:

(1) Resource allocation mode 1
The network schedules sidelink. The terminal 20 performs a sidelink transmission based on a sidelink grant received from the network.
(2) Resource allocation mode 2

The terminal 20 autonomously selects and transmits the sidelink resources. The terminal 20 monitors the transmissions by other terminals 20 in advance, and selects available resources. Monitoring the transmissions of other terminals 20 may be referred to as "sensing." Every terminal 20 specifies future transmission resources, and is referenced when resources are selected as described above. Specifying future resources may be referred to as "reservation."

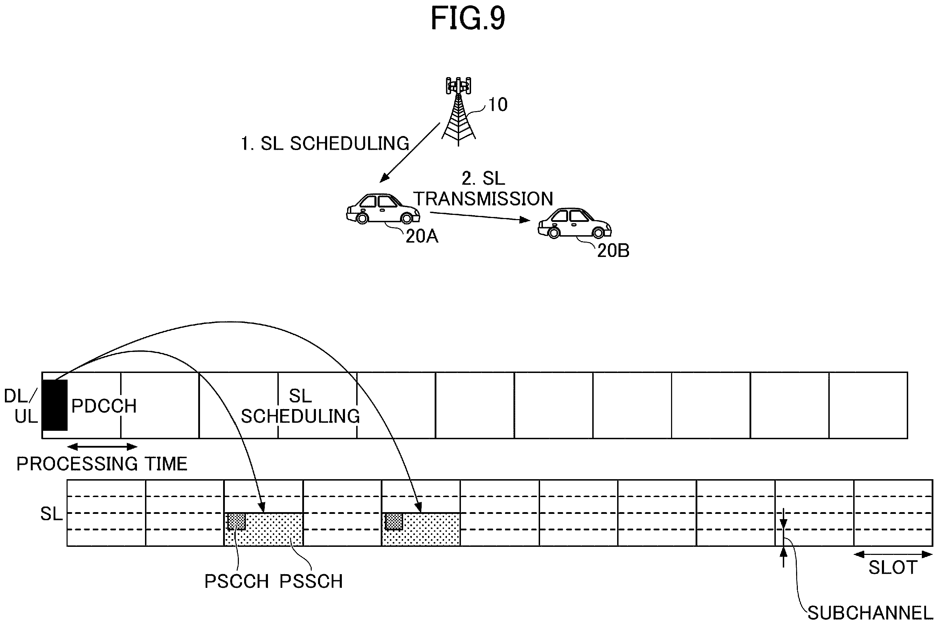

Fig. 9 is a diagram that shows an example of resource allocation mode 1. Referring to Fig. 9, in resource allocation mode 1, SL transmission resources are allocated from the base station 10 to the terminal 20A. That is, as shown in Fig. 3, SL transmission resources (PSCCH/PSCCH) are allocated to the terminal 20A by a PDCCH received from the base station 10 (to be more specific, DCI), and the terminal 20A performs SL transmissions to the terminal 20B using these transmission resources.

To be more specific, to assign SL transmissions from the base station 10 to the terminal 20A, a dynamic grant (DG), a configured grant (CG) type 1, and a CG type 2 are used. In resource allocation mode 1, a DCI format 3_0 is used for DG and CG type 2. Note that the monitoring occasions in DCI format 3_0 are configured differently from other formats.

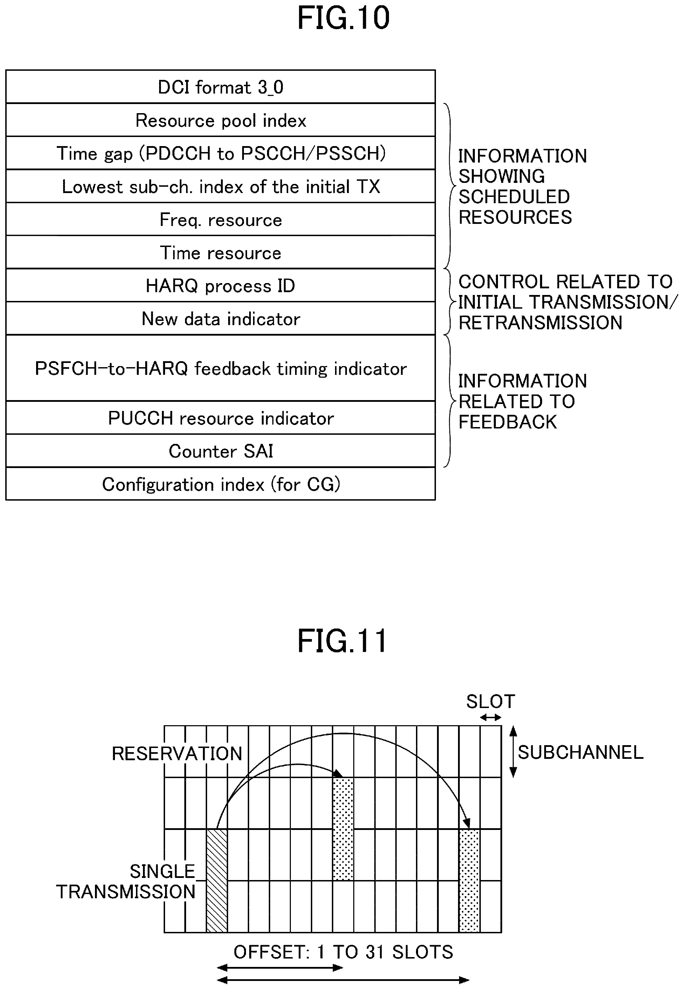

Fig. 10 is a diagram for explaining an example of DCI format. As shown in Fig. 10, the information indicated by DCI format 3_0 includes information about the scheduled resources, information about the initial transmission/retransmissions, and information about HARQ (Hybrid Automatic Repeat reQuest) feedback. As for the information about the initial transmission/retransmissions, the transmitting terminal 20A manages the association between the HPN (HARQ Process Number) indicated in DCI format 3_0 and the HPN indicated in SCI.

In resource allocation mode 2, the terminal 20 autonomously selects resources for periodic or aperiodic traffic by performing the following two steps. When this takes place, periodic or aperiodic resource reservations by other terminals 20 are taken into account.

(Step 1) Identifying candidate resources in the resource selection window.

(Step 2) Selecting resources to be used for transmissions or retransmissions from the identified candidates.

Step 1 above is performed based on two types of resource reservations. The first one is a reservation of aperiodic traffic for transmission or retransmission by the time resource assignment field. The second one is a reservation of periodic traffic for transmissions or retransmissions by the resource reservation period field.

Fig. 11 shows an example (1) of resource allocation mode 2. As shown in Fig. 11, multiple aperiodic resources may be reserved in a single transmission. For example, the offset from the transmission of a reservation to the reserved resources may vary from 1 slot to 31 slots.

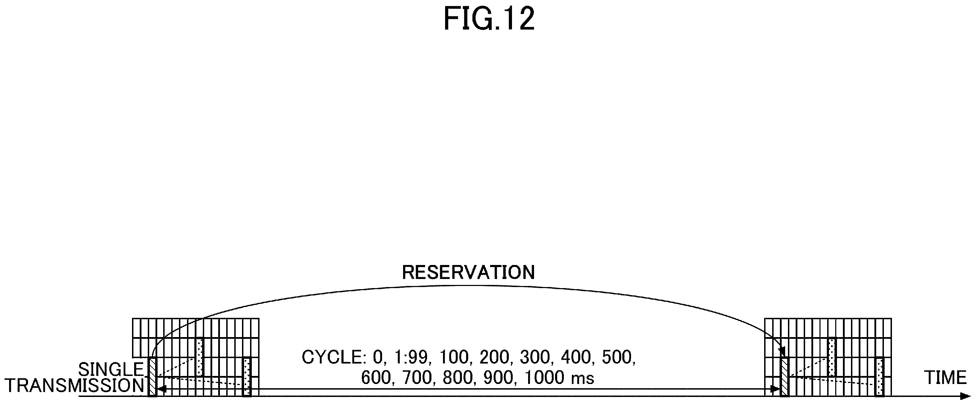

Fig. 12 shows an example (2) of resource allocation mode 2. As shown in Fig. 12, resources may be reserved periodically after a single transmission is made. The periodicity here may be, for example, 0 ms, 1 ms to 99 ms, 100 ms, 200 ms, 300 ms, 400 ms, 500 ms, 600 ms, 700 ms, 800 ms, 900 ms, 1,000 ms.

Here, when multiple transmissions are performed in an unlicensed band and these transmissions are contiguous in the time domain, once LBT is done successfully, it is no longer necessary to perform LBT on a per transmission basis thereafter. When allocating contiguous time-domain resources in sidelink communication, the following operation (1) or operation (2) is assumed for periodic or aperiodic resource allocation, respectively:

(1) In periodic transmission, the value of the resource reservation field in a SCI format 1-A is set to the minimum value (that is, one slot).

(2) In aperiodic transmission, allocation of contiguous resources is configured by the time resource assignment field in SCI format 1-A.

However, in both (1) and (2) above, the last symbol in each slot in sidelink is specified as a "gap symbol" for switching between transmission and reception, and so a one-symbol non-transmission period is created even when contiguous slots are allocated.

For example, assuming that no transmission is to be performed in the following slot, transmission and reception are switched, so that the sensing procedure is started. On the other hand, if transmissions are going to be performed in the following slot, the transmissions are contiguous, and therefore transmission and reception do not switch.

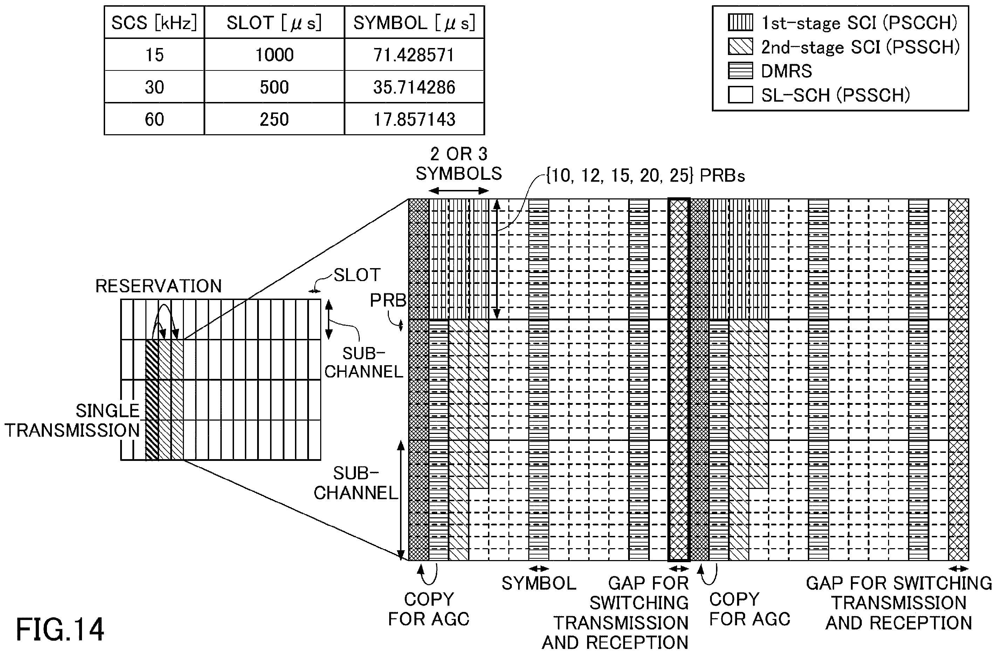

Fig. 14 is a diagram for explaining an example of contiguous transmissions in the sidelink. As shown in Fig. 14, even if a single transmission is performed in contiguous slots, a gap is provided to switch between transmission and reception. For example, when the SCS is 15 kHz, one symbol is 71.4 us; when the SCS is 30 kHz, one symbol is 35.7 us; and, when the SCS is 60 kHz, one symbol is 17.8 us. In each case, a gap greater than or over 16 us is created, and therefore the contiguous transmissions are not seen as one transmission burst.

As mentioned earlier, even if contiguous slots are allocated and transmission and reception do not switch, there is still a one-symbol gap, and the subsequent transmissions require the LBT operation.

Therefore, the terminal 20 may perform the following operations 1 to 4:

Operation 1: A transmission burst in SL transmission in an unlicensed band may be defined.
Operation 2: Transmissions may be allowed in the gap symbol in SL slots.
Operation 3: Resources may be selected such that transmissions are performed in contiguous slots.
Operation 4: Operation 1 and operation 2 may be applied to multiple SL transmissions/receptions in which PSFCH is included.

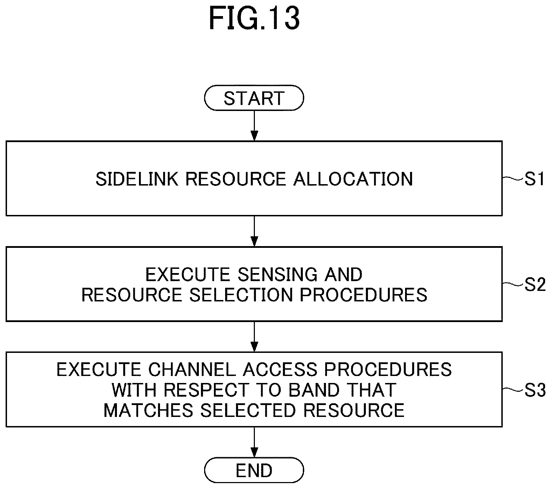

Fig. 13 is a flowchart for explaining an example of sidelink communication in an unlicensed band according to an embodiment of the present invention. In step S1, the terminal 20 acquires sidelink resource allocation. For example, the terminal 20 may receive sidelink resource allocation from the base station 10, or a resource pool may be configured. In the following step S2, the terminal 20 carries out sensing and resource selection procedures. Step S2 may be executed in the resource pool in the event resource allocation mode 2 is used. In the following step S3, the terminal 20 carries out channel access procedures for the band in which the selected resource is included.

Above operation 1 may be applied to the channel access procedures of step S3. Above operation 2 and operation 4 may be applied to sidelink transmissions after the channel access procedures in step S3 are carried out successfully. The above operation 3 may be applied to the resource selection procedures in step S2.

Below, "Operation 1: A transmission burst in SL transmission in an unlicensed band may be defined." will be described.

In sidelink communication in an unlicensed band, a transmission burst may be defined as the following (1) to (5).

(1) The definition of a UL transmission burst may be applied without defining an SL transmission burst. A UL transmission burst and an SL transmission burst are both defined as a set of transmissions from a UE, not including a gap of over 16 us. A gap of over 16 us divides UL transmission bursts or SL transmission bursts. Multiple transmissions from a UE are likewise divided by a gap of over 16 us. After the gap in the UL transmission burst or SL transmission burst, the UE can perform transmissions without performing sensing to check the availability of the corresponding channel.

(2) An SL transmission burst may be defined. An SL transmission burst is defined as a set of transmissions from a UE to one or more other UEs, not including a gap of over 16 us. A gap of over 16 us divides an SL transmission burst. Multiple transmissions from a UE to one or more other UEs are likewise divided by a gap of over 16 us. After the gap in the SL transmission burst, the UE can perform transmissions without performing sensing to check the availability of the corresponding channel.

Above (2) may be limited to communication between UEs. Also, above (2) may be limited to sidelink transmission. Also, in above (2), a gap having a time length other than 16 us may be allowed to be provided in one SL transmission burst. For example, a gap of X us may be allowed to be provided in one SL transmission burst. The value of X may be indicated in the technical specification, may be configured or pre-configured, or may be indicated by a MAC-CE or DCI. The value of X may be, for example, 25 $\mu$s.

(3) Resources defined as a transmission burst in an SL resource pool may be defined as physical resources. Physical resources may be, for example, physical slots or physical time. Logical resources may be defined as well. Logical resources may be, for example, logical slots or logical time.

(4) A transmission burst may be contiguous transmissions from a UE to the same UE, or may be contiguous transmissions from a UE to UEs different from each other. For example, a transmission burst may be unicast transmissions by a UE-X or may be groupcast transmissions by the UE-X.

(5) A transmission burst may be contiguous transmissions from the same UE, or may be contiguous transmissions from different UEs. For example, a transmission by a UE-X and the following transmission(s) by a UE-Y may constitute a transmission burst.

By means of the above operation 1, a transmission burst for sidelink communication is specified, and thereupon it becomes possible to transmit multiple contiguous SL signals or perform contiguous transmissions that do not require channel LBT.

Below, "Operation 2: Transmissions may be allowed in the gap symbol in SL slots." will be explained.

Any of a PSCCH, a PSSCH or a DM-RS may be allocated in the gap symbol in a given slot.

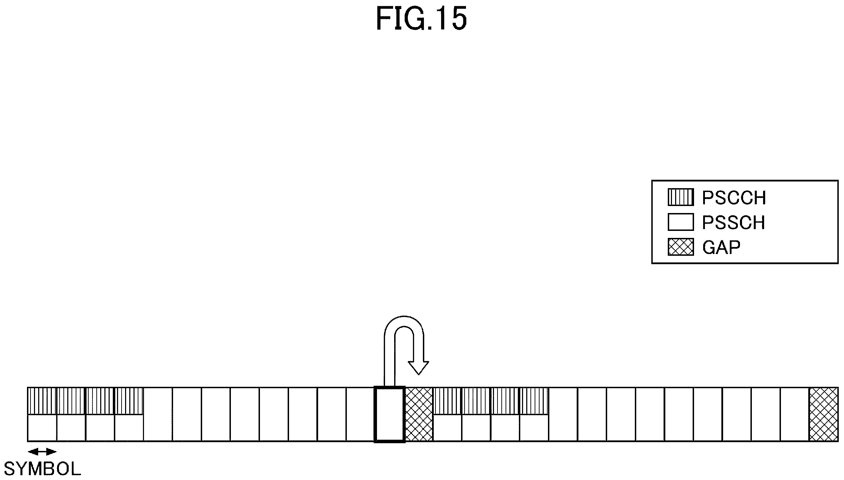

Fig. 15 is a diagram for explaining an example (1) of contiguous transmissions according to an embodiment of the present invention. As shown in Fig. 15, a signal that is the same as all or part of the signal transmitted in an n-th symbol in a given slot may be allocated to the gap symbol of the slot. Fig. 15 shows an example in which all or part of the signal allocated to the 13th symbol from the beginning is transmitted in the gap symbol. Also, the terminal 20 may remove the CP part of the signal allocated to the 13th symbol from the beginning, and transmit the resulting signal, in parts, from the beginning of the gap symbol.

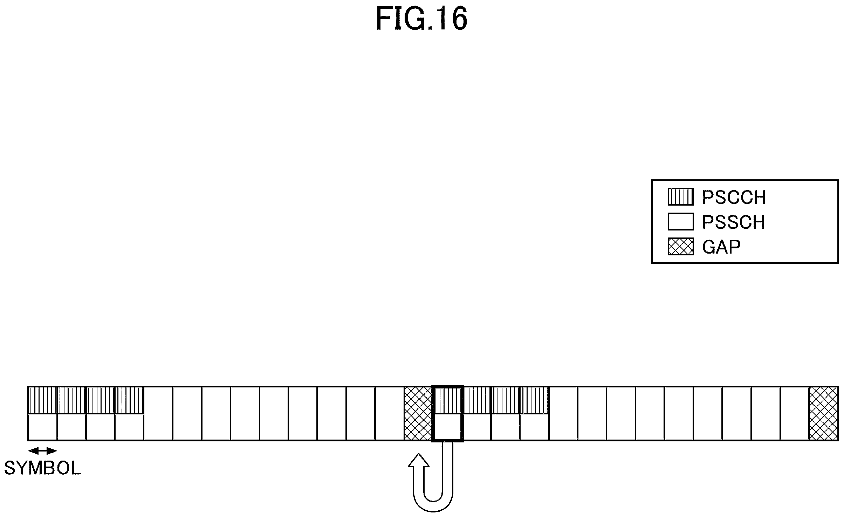

Fig. 16 is a diagram for explaining an example (2) of contiguous transmissions according to an embodiment of the present invention. As shown in Fig. 16, a signal that is the same as all or part of the signal transmitted in an n-th symbol in the next slot may be allocated to the gap symbol of a given slot. Fig. 16 shows an example in which all or part of the signal allocated to the first symbol is transmitted in the gap symbol. Also, the terminal 20 may remove the CP part of the signal allocated to the first symbol, and transmit the resulting signal at the end of the gap symbol.

The condition for applying operation 2 may be any of the following conditions (1) to (6), or a combination of multiple conditions.

(1) When a given SL slot n and an SL slot n+1 are scheduled by SCI format 1-A transmitted in a given PSCCH, operation 2 may be applied to the gap symbol at the end of SL slot n.

(2) Operation 2 may be applied only to SL slots in which there are no PSFCH transmission resources.

(3) Operation 2 may be applied to resources that satisfy the conditions (1) and (2) above.

(4) Whether or not to apply operation 2 may be determined based on an indication in SCI format 1-A, an SCI format 2-A, or an SCI format 2-B.

(5) If a PSCCH/PSSCH transmission is scheduled in a slot N in a given SL resource pool by a control signal transmitted from a given base station 10 or a given terminal 20, and then the PSCCH/PSSCH from the same transmitter is scheduled in a slot N+1 by another control signal at a time prior to slot N, operation 2 may be implicitly applied to the PSSCH in slot N or to the last symbol of slot N.

(6) If a PSFCH transmission is scheduled in slot N in a given SL resource pool by a control signal transmitted from a given base station 10 or a given terminal 20, and then the PSCCH/PSSCH from the same transmitter is scheduled in slot N+1 by another control signal at a time prior to slot N, operation 2 may be implicitly applied to the gap symbol after the PSFCH in slot N.

Also, the signal transmitted in the gap symbol of slot n may be any of the following (1) to (4) :

(1) A copy of any PSCCH/PSSCH symbol in slot n.
(2) DM-RS.
(3) A copy of any PSCCH/PSSCH symbol in slot n+1.
(4) A signal obtained by extending the CP of the signal transmitted in the first symbol of slot n+1.

Also, the relationship between slot n and slot n+1 may be any of (1) to (4) below:

(1) Slot n and slot n+1 may be configured or pre-configured to be included in the same resource pool.
(2) Slot n and slot n+1 may be two contiguous slots.
(3) Slot n and slot n+1 may be two physically contiguous slots.
(4) Slot n and slot n+1 may be two logically contiguous slots.

Also, as for the method of calculating the transmission power of a signal transmitted in the gap symbol of an SL slot, the method shown in (1) or (2) below may be used.
(1) The terminal 20 may determine the transmission power based on DL path loss.
(2) The terminal 20 may determine the transmission power based on SL path loss.

As described above, operation 2 makes it possible to eliminate the need for LBT or shorten the time for LBT for transmissions after a gap in SL.
Below, "Operation 3: Resources may be selected such that transmissions are performed in contiguous slots." will be described.
When selecting an SL resource, a particular slot may be selected. For example, an SL resource may be selected by either procedure (1) or procedure (2) shown below. Note that a particular slot may be defined as one resource unit.
(1) Procedure of selecting resource candidates in the physical layer.
(2) Procedure of selecting the resources for actual use from the resource candidates in the MAC layer.

For example, the particular slot may be any one or more of the following (1) to (5):
(1) Multiple contiguous slots.
(2) Multiple physically contiguous slots.
(3) Multiple logically contiguous slots.
(4) The slot before or after a resource which is already reserved by the terminal 20 and for which scheduling information has been transmitted.
(5) The slot after a slot in which PSFCH transmission is already configured by the terminal 20.

For example, the terminal 20 may operate as shown in (1) to (3) below:

(1) When selecting a resource candidate in the physical layer, the terminal 20 may, for example, prioritize the resource located immediately after or immediately before a resource already reserved for the terminal 20 as a resource candidate.
(2) When selecting a resource in the MAC layer, if the resource candidates include a slot that is contiguous with already reserved resources in the direction of time, the terminal 20 may select the slot as a slot for use or reserve the slot.
(3) When selecting a resource candidate in the physical layer, the terminal 20 may, for example, prioritize the slot in which PSFCH transmission is already scheduled by the terminal 20, or the slot immediately after or immediately before the slot.

As described above, operation 3 makes it possible to eliminate the need for LBT or shorten the time for LBT for transmissions after a gap in SL.

Below, "Operation 4: Operation 1 and operation 2 may be applied to multiple SL transmissions/receptions in which PSFCH is included." will be described below.

Any of a PSCCH, a PSSCH or a DM-RS may be allocated to a gap symbol in a given slot.

A signal that is the same as all or part of the signal transmitted in an n-th symbol in a given slot may be allocated to the gap symbol of the slot. For example, the terminal 20 may transmit all or part of the signal allocated to the 13th symbol from the beginning, in the gap symbol. For example, the terminal 20 may remove the CP part from the signal allocated to the 13th symbol from the beginning, and transmit the resulting signal from the beginning of the gap symbol. For example, the terminal 20 may extend the CP of the PSFCH signal transmitted in the first symbol of the PSFCH symbols, and transmit the resulting PSFCH signal in the gap symbol before the PSFCH symbols.

In the gap symbol of a given slot, the terminal 20 may allocate a signal that is the same as all or part of the signal transmitted in an n-th symbol of the next slot. The terminal 20 may transmit all or part of the signal allocated to the first symbol, in the gap symbol. Also, the terminal 20 may remove the CP part from the signal allocated to the beginning, and transmit the resulting signal at the end of the gap symbol.

As described above, operation 4 makes it possible to eliminate the need for LBT or shorten the time for LBT for transmissions after a gap in SL.

In the above embodiment, "configuration/to configure" may be replaced with "pre-configuration/to pre-configure."

The above embodiment may also be applied to the operation in which a given terminal 20 configures or allocates transmission resources for another terminal 20.

The above-described embodiment is not limited to V2X terminals and may be applied to terminals that perform D2D communication.

The above embodiment makes it possible to carry out transmissions efficiently by reducing the number of times to perform LBT in channel access procedures when sidelink transmissions that are contiguous in the time domain are carried out in an unlicensed band.

In other words, it is possible to carry out terminal-to-terminal direct communication that is suitable for channel access procedures in unlicensed bands.

(Device structure)

Next, functional configuration examples of the base station 10 and the terminal 20 that execute the processing and operation described above will be described. The base station 10 and the terminal 20 include a function of implementing the above-described embodiment. However, each of the base station 10 and the terminal 20 may have only a part of functions in the embodiment.

<Base Station 10>

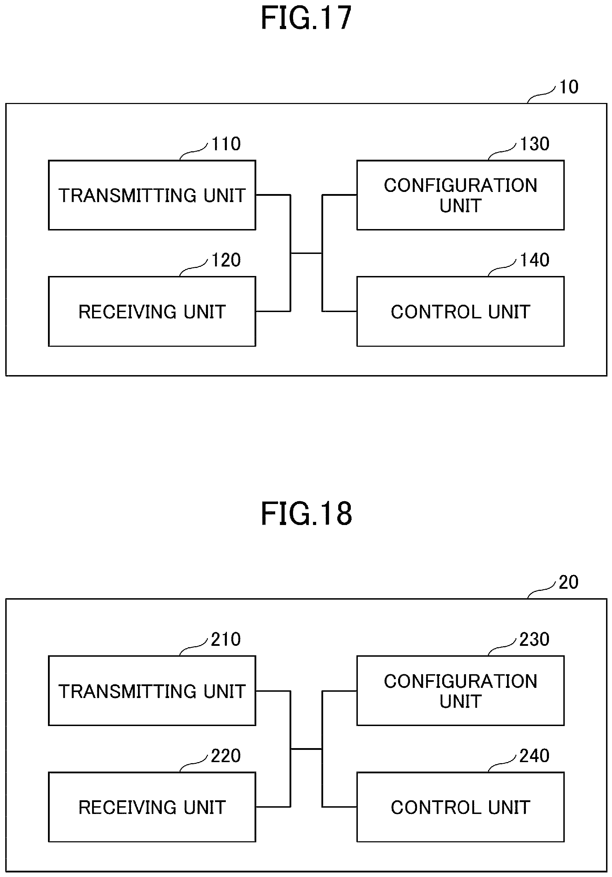

Fig. 17 is a diagram illustrating an example of a functional configuration of the base station 10. As illustrated in Fig. 17, the base station 10 includes a transmission unit 110, a reception unit 120, a configuration unit 130, and a control unit 140. The functional configuration illustrated in Fig. 17 is merely an example. As long as the operation according to the embodiment of the present invention can be executed, the functional classification and the name of the functional units may be freely selected.

The transmission unit 110 has a function of generating a signal to be transmitted to the terminal 20 side and wirelessly transmitting the signal. The reception unit 120 has a function of receiving various signals transmitted from the terminal 20 and acquiring, for example, information of an upper layer from the received signals. In addition, the transmission unit 110 has a function of transmitting NR-PSS, NR-SSS, NR-PBCH, a DL/UL control signal, a DL reference signal, and the like to the terminal 20.

The configuration unit 130 stores setting information set in advance and various types of setting information to be transmitted to the terminal 20 in a storage device, and reads the setting information from the storage device as necessary. A content of the setting information is, for example, information related to setting of the D2D communication.

As described in the embodiment, the control unit 140 performs processing related to setting for the terminal 20 to perform the D2D communication. Furthermore, the control unit 140 transmits scheduling of the D2D communication and the DL communication to the terminal 20 via the transmission unit 110. Furthermore, the control unit 140 receives information regarding HARQ responses of the D2D communication and the DL communication from the terminal 20 via the reception unit 120. The functional unit related to signal transmission in the control unit 140 may be included in the transmission unit 110, and the functional unit related to signal reception in the control unit 140 may be included in the reception unit 120.

<Terminal 20>

Fig. 18 is a diagram illustrating an example of a functional configuration of the terminal 20. As illustrated in Fig. 18, the terminal 20 includes a transmission unit 210, a reception unit 220, a configuration unit 230, and a control unit 240. The functional configuration illustrated in Fig. 18 is merely an example. As long as the operation according to the embodiment of the present invention can be executed, the functional classification and the name of the functional units may be freely selected.

The transmission unit 210 generates a transmission signal from transmission data and wirelessly transmits the transmission signal. The reception unit 220 wirelessly receives various signals and acquires a signal of an upper layer from the received signals of a physical layer. Furthermore, the reception unit 220 has a function of receiving NR-PSS, NR-SSS, NR-PBCH, a DL/UL/SL control signal, a reference signal, and the like transmitted from the base station 10. Furthermore, for example, the transmission unit 210 transmits a physical sidelink control channel (PSCCH), a physical sidelink shared channel (PSSCH), a physical sidelink discovery channel (PSDCH), a physical sidelink broadcast channel (PSBCH), or the like to the other terminal 20 as the D2D communication, and the reception unit 220 receives PSCCH, PSSCH, PSDCH, PSBCH, or the like from the other terminal 20.

The configuration unit 230 stores various types of setting information received from the base station 10 or the terminal 20 by the reception unit 220 in a storage device, and reads the setting information from the storage device as necessary. The configuration unit 230 also stores setting information set in advance. A content of the setting information is, for example, information related to setting of the D2D communication.

As described in the embodiment, the control unit 240 controls the D2D communication for establishing an RRC connection with another terminal 20. Furthermore, the control unit 240 performs processing related to a power saving operation. Furthermore, the control unit 240 performs processing related to HARQ of the D2D communication and the DL communication. Furthermore, the control unit 240 transmits, to the base station 10, information regarding HARQ responses of the D2D communication and the DL communication scheduled from the base station 10 to another terminal 20. Furthermore, the control unit 240 may schedule the D2D communication to another terminal 20. Furthermore, the control unit 240 may autonomously select a resource to be used for the D2D communication from a resource selection window based on a result of sensing, or may execute reevaluation or pre-emption. Furthermore, the control unit 240 performs processing related to power saving in transmission and reception of the D2D communication. Furthermore, the control unit 240 performs processing related to inter-terminal cooperation in the D2D communication. The functional unit related to signal transmission in the control unit 240 may be included in the transmission unit 210, and the functional unit related to signal reception in the control unit 240 may be included in the reception unit 220.

(Hardware structure)

The block diagrams (Figs. 17 and 18) used for the description of the above embodiment illustrate blocks of functional units. The functional blocks (configuration units) are realized by any combination of at least one of hardware and software. A method of implementing each functional block is not particularly limited. That is, each functional block may be implemented by using one physically or logically combined device, or may be implemented by directly or indirectly (for example, by using wired, wireless, or the like) connecting two or more physically or logically separated devices to each other and using the plurality of devices. The functional block may be implemented by combining software with the one device or the plurality of devices.

The functions include, but are not limited to, deciding, determining, judging, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating and mapping, assigning, and the like. For example, a functional block (configuration unit) that causes transmission to function is referred to as a transmission unit (transmitting unit) or a transmitter. In any case, as described above, the implementation method is not particularly limited.

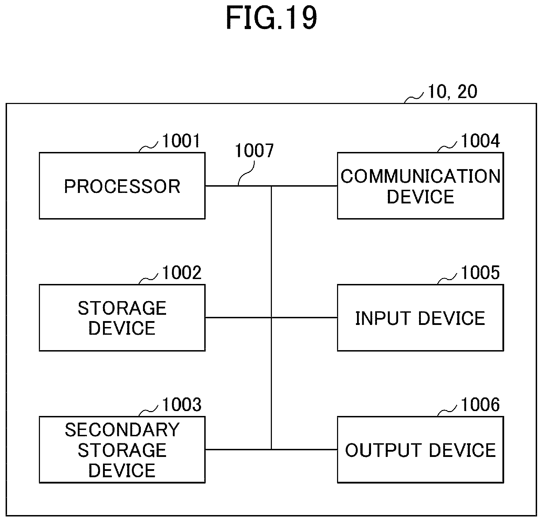

For example, the base station 10, the terminal 20, and the like in the embodiment of the present disclosure may function as a computer that performs processing of a wireless communication method of the present disclosure. Fig. 19 is a diagram illustrating an example of hardware configurations of the base station 10 and the terminal 20 according to the embodiment of the present disclosure. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be replaced with a circuit, a device, a unit, or the like. The hardware configurations of the base station 10 and the terminal 20 may be configured to include one or more devices illustrated in the drawing, or may be configured without including a part of devices.

Each function in the base station 10 and the terminal 20 is implemented by the processor 1001 performing calculation by loading predetermined software (program) on hardware such as the processor 1001 and the storage device 1002, controlling communication by the communication device 1004, and controlling at least one of reading and writing of data in the storage device 1002 and the auxiliary storage device 1003.

The processor 1001 operates, for example, an operating system to control the entire computer. The processor 1001 may include a central processing unit (CPU) including an interface with a peripheral device, a control device, an arithmetic device, a register, and the like. For example, the control unit 140, the control unit 240, and the like described above may be implemented by the processor 1001.

In addition, the processor 1001 reads a program (a program code), a software module, data, or the like from at least one of the auxiliary storage device 1003 and the communication device 1004 to the storage device 1002, and executes various types of processing according to the program, the software module, the data, or the like. As the program, a program that causes a computer to execute at least part of the operations described in the above-described embodiments is used. For example, the control unit 140 of the base station 10 illustrated in Fig. 17 may be implemented by a control program stored in the storage device 1002 and operated by the processor 1001. Furthermore, for example, the control unit 240 of the terminal 20 illustrated in Fig. 18 may be implemented by a control program stored in the storage device 1002 and operated by the processor 1001. Although it has been described that the above-described various types of processing are executed by one processor 1001, the various types of processing may be executed simultaneously or sequentially by two or more processors 1001. The processor 1001 may be implemented by one or more chips. The program may be transmitted from a network via an electric communication line.

The storage device 1002 is a computer-readable recording medium, and may be configured with, for example, at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage device), or the like. The storage device 1002 can store a program (a program code), a software module, and the like that can be executed to implement the communication method according to the embodiment of the present disclosure.

The auxiliary storage device 1003 is a computer-readable recording medium, and may be configured with, for example, at least one of an optical disk such as a compact disc ROM (CD-ROM), a hard disk drive, a flexible disk, a magneto-optical disk (for example, a compact disc, a digital versatile disc, or a Blu-ray (registered trademark) disc), a smart card, a flash memory (for example, a card, a stick, or a key drive), a floppy (registered trademark) disk, a magnetic strip, and the like. The above-described storage medium may be, for example, a database including at least one of the storage device 1002 and the auxiliary storage device 1003, a server, or another appropriate medium.

The communication device 1004 is hardware (a transmission/reception device) for performing communication between computers via at least one of a wired network and a wireless network, and is also referred to as, for example, a network device, a network controller, a network card, a communication module, or the like. The communication device 1004 may be configured with a high-frequency switch, a duplexer, a filter, a frequency synthesizer, and the like to implement, for example, at least one of frequency division duplex (FDD) and time division duplex (TDD). For example, a transmission/reception antenna, an amplifier unit, a transmission/reception unit, a transmission/reception path interface, and the like may be implemented by the communication device 1004. The transmission/reception unit may be implemented such that the transmission unit and the reception unit are physically or logically separated from each other.

The input device 1005 is an input device (for example, a keyboard, a mouse, a microphone, a switch, a button, a sensor, or the like) that receives an input from the outside. The output device 1006 is an output device (for example, a display, a speaker, an LED lamp, and the like) that performs an output to the outside. Note that the input device 1005 and the output device 1006 may be formed to be integrated with each other (for example, a touch panel).

In addition, the respective devices such as the processor 1001 and the storage device 1002 are connected to each other by the bus 1007 for communicating information. The bus 1007 may be configured using a single bus or may be configured using different buses between the devices.

Furthermore, the base station 10 and the terminal 20 may be configured to include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented using at least one of the pieces of hardware.

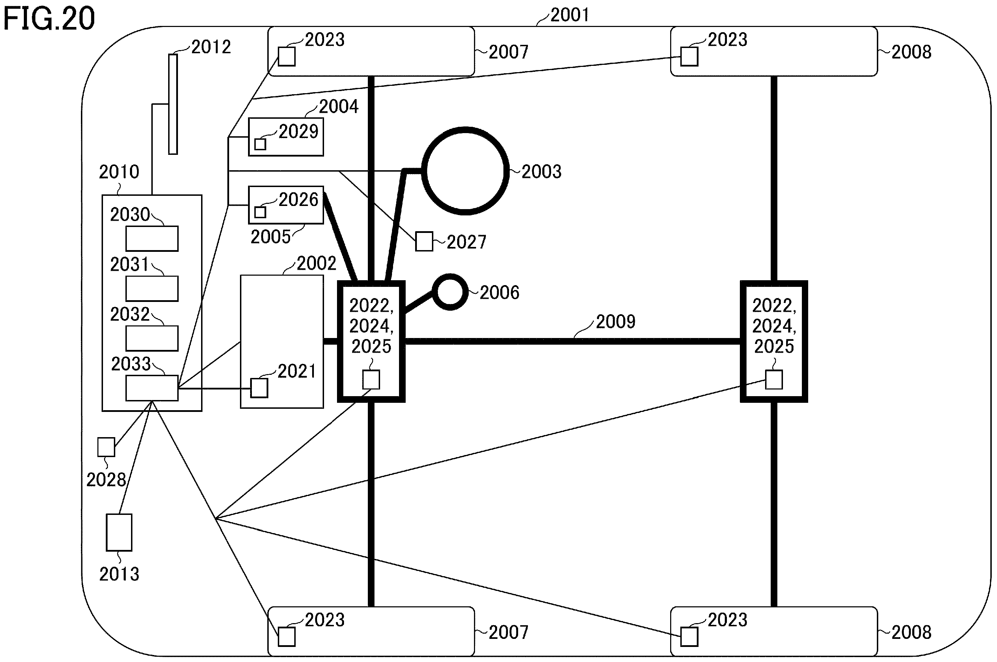

Fig. 20 illustrates a configuration example of a vehicle 2001. As illustrated in Fig. 20, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. Each aspect/embodiment described in the present disclosure may be applied to a communication device mounted on the vehicle 2001, and for example, may be applied to the communication module 2013.

The drive unit 2002 includes, for example, an engine, a motor, or a hybrid of an engine and a motor. The steering unit 2003 includes at least a steering wheel (also referred to as a handle), and is configured to steer at least one of the front wheel and the rear wheel based on an operation of the steering wheel operated by a user.

The electronic control unit 2010 includes a microprocessor 2031, a memory (ROM, RAM) 2032, and a communication port (IO port) 2033. Signals from various sensors 2021 to 2029 provided in the vehicle 2001 are input to the electronic control unit 2010. The electronic control unit 2010 may be referred to as an electronic control unit (ECU).

Examples of signals from the various sensors 2021 to 2029 include a current signal from the current sensor 2021 that senses the current of the motor, a rotation speed signal of the front wheel and the rear wheel acquired by the rotation speed sensor 2022, an air pressure signal of the front wheel and the rear wheel acquired by the air pressure sensor 2023, a vehicle speed signal acquired by the vehicle speed sensor 2024, an acceleration signal acquired by the acceleration sensor 2025, a depression amount signal of an accelerator pedal acquired by the accelerator pedal sensor 2029, a depression amount signal of a brake pedal acquired by the brake pedal sensor 2026, an operation signal of a shift lever acquired by the shift lever sensor 2027, and a detection signal for detecting an obstacle, a vehicle, a pedestrian, and the like acquired by the object detection sensor 2028.

The information service unit 2012 is composed of: a variety of equipment, such as a car navigation system, an audio system, speakers, a television, and a radio, for providing (outputting) various types of information such as driving information, traffic information, and entertainment information; and one or more ECUs that control these pieces of equipment. The information service unit 2012 uses information obtained from an external device via the communication module 2013 or the like, to provide various types of multimedia information and multimedia services to the occupants of the vehicle 2001. The information service unit 2012 may include an input device for receiving inputs from the outside (for example, a keyboard, a mouse, a microphone, a switch, a button, a sensor, etc.), or include an output device for sending outputs to the outside (for example, a display, a speaker, an LED lamp, a touch panel, etc.).

A driving assistance system unit 2030 is configured with various devices for providing functions of preventing an accident in advance and reducing a driver's driving load, such as a millimeter wave radar, light detection and ranging (LiDAR), a camera, a positioning locator (for example, GNSS or the like), map information (for example, a high definition (HD) map, an autonomous vehicle (AV) map, and the like), a gyro system (for example, an inertial measurement unit (IMU), an inertial navigation system (INS), or the like), an artificial intelligence (AI) chip, and an AI processor, and one or more ECUs that control the devices. The driving assistance system unit 2030 also transmits and receives various types of information via the communication module 2013 to implement a driving assistance function or an automatic driving function.

The communication module 2013 may communicate with the microprocessor 2031 and components of the vehicle 2001 via a communication port. For example, the communication module 2013 transmits and receives, via the communication port 2033, data to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and the sensors 2021 to 2029 provided in the vehicle 2001.

The communication module 2013 is a communication device capable of being controlled by the microprocessor 2031 of the electronic control unit 2010 and capable of communicating with an external device. For example, various types of information are transmitted and received to and from the external device via wireless communication. The communication module 2013 may be provided on the inside or the outside of the electronic control unit 2010. The external device may be, for example, a base station, a mobile station, or the like.

The communication module 2013 may transmit at least one of: signals input to the electronic control unit 2010 from the sensors 2021 to 2028; information obtained based on these signals; and information based on inputs from the outside (user) obtained via the information service unit 2012, to external devices via wireless communication. The electronic control unit 2010, the sensors 2021 to 2028, the information service unit 2012, and the like may be referred to as an "input unit" that accepts inputs. For example, a PUSCH transmitted from the communication module 2013 may include information that is based on an input such as one described above.

The communication module 2013 receives various information (traffic information, signal information, inter-vehicle distance information, etc.) transmitted from external devices and displays these pieces of information on an information service unit 2012 provided in the vehicle 2001. The information service unit 2012 may also be referred to as an "output unit" that outputs information (or that, for example, outputs information to devices such as a display or a speaker based on a PDSCH (or data/information decoded from a PDSCH) received by the communication module 2013). In addition, the communication module 2013 stores the information received from the external devices in the memory 2032, to which the microprocessor 2031 has access. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2029, and so forth, mounted in the vehicle 2001.

(Summary of embodiment)

As described above, according to an embodiment of the present invention, a terminal is provided. This terminal includes: a receiving unit configured to perform sensing in a resource pool that is set in an unlicensed band; a control unit configured to select a resource based on a result of the sensing and carry out a channel access procedure for a band in which the selected resource is included; and a transmitting unit configured to carry out a transmission to another terminal in the selected resource when the channel access procedure is carried out successfully, and the transmitting unit carries out the transmission in a gap symbol at an end of an earlier slot among at least two contiguous slots included in the selected resource.

According to the above structure and configuration, when sidelink transmissions that are contiguous in the time domain are carried out in an unlicensed band, the number of times to perform LBT in channel access procedures can be reduced, and the transmissions can be carried out efficiently. In other words, it is possible to carry out terminal-to-terminal direct communication that is suitable for channel access procedures in unlicensed bands.

The transmitting unit may transmit, in the gap symbol, part or all of a signal to be transmitted in a symbol included in the earlier slot or a later slot among the two contiguous slots. According to the above structure and configuration, when sidelink transmissions that are contiguous in the time domain are carried out in an unlicensed band, the number of times to perform LBT in channel access procedures can be reduced, and the transmissions can be carried out efficiently.

The transmitting unit may transmit, in the gap symbol, a signal of an extended part of a cyclic prefix (CP), the cyclic prefix being a cyclic prefix of a signal transmitted in a first symbol of the later slot. According to the above structure and configuration, when sidelink transmissions that are contiguous in the time domain are carried out in an unlicensed band, the number of times to perform LBT in channel access procedures can be reduced, and the transmissions can be carried out efficiently.

When, after the first slot is scheduled, a second slot among the two contiguous slots is scheduled at a time prior to the earlier slot, the transmitting unit may perform the transmission in the gap symbol at the end of the first slot. According to the above structure and configuration, when sidelink transmissions that are contiguous in the time domain are carried out in an unlicensed band, the number of times to perform LBT in channel access procedures can be reduced, and the transmissions can be carried out efficiently.

The control unit may select the resource such that contiguous slots are provided. According to the above structure and configuration, when sidelink transmissions that are contiguous in the time domain are carried out in an unlicensed band, the number of times to perform LBT in channel access procedures can be reduced, and the transmissions can be carried out efficiently.

Also, according to an embodiment of the present invention, a communication method implemented by a terminal is provided. The communication method includes: a receiving step of performing sensing in a resource pool that is set in an unlicensed band; a control step of selecting a resource based on a result of the sensing and carrying out a channel access procedure for a band in which the selected resource is included; and a transmitting step of carrying out a transmission to another terminal in the selected resource when the channel access procedure is carried out successfully, and, among at least two contiguous slots included in the selected resource, the transmission is carried out in a gap symbol at an end of an earlier slot.

According to the above structure and configuration, when sidelink transmissions that are contiguous in the time domain are carried out in an unlicensed band, the number of times to perform LBT in channel access procedures can be reduced, and the transmissions can be carried out efficiently. In other words, it is possible to carry out terminal-to-terminal direct communication that is suitable for channel access procedures in unlicensed bands.

(Supplement to Embodiment)

Although the embodiments of the present invention have been described above, the disclosed invention is not limited to such embodiments, and those skilled in the art will understand various modifications, revisions, alternatives, substitutions, and the like. Although the description has been given using specific numerical examples to facilitate understanding of the invention, the numerical values are merely examples, and any appropriate value may be used, unless otherwise specified. The classification of items in the above description is not essential to the present invention, and items described in two or more items may be used in combination as necessary, or items described in one item may be applied to items described in another item (as long as there is no contradiction). A boundary of a functional unit or a processing unit in the functional block diagram does not necessarily correspond to a boundary of a physical component. The operations of the plurality of functional units may be physically performed by one component, or the operation of one functional unit may be physically performed by a plurality of components. In the processing procedure described in the embodiment, the order of the processing may be changed as long as there is no contradiction. For convenience of processing description, the base station 10 and the terminal 20 have been described using a functional block diagram, but such a device may be implemented by hardware, software, or a combination thereof. Software operated by a processor included in the base station 10 according to the embodiments of the present invention, and software operated by a processor included in the terminal 20 according to the embodiments of the present invention may be stored in any appropriate storage medium such as a random access memory (RAM), a flash memory, a read-only memory (ROM), an EPROM, an EEPROM, a register, a hard disk (HDD), a removable disk, a CD-ROM, a database, or a server.

Furthermore, the indication of information is not limited to the aspects/embodiments described in the present disclosure, and may be performed using other methods. For example, the indication of information may be performed by physical layer signaling (for example, downlink control information (DCI) and uplink control information (UCI)), upper layer signaling (for example, radio resource control (RRC) signaling and medium access control (MAC) signaling), broadcast information (master information block (MIB) and system information block (SIB)), other signals, or a combination thereof. Furthermore, the RRC signaling may be referred to as an RRC message, and may be referred to as, for example, an RRC connection setup message, an RRC connection reconfiguration message, or the like.

Each aspect/embodiment described in the present disclosure may be applied to at least one of a system utilizing long term evolution (LTE), LTE-Advanced (LTE-A), SUPER 3G, IMT-Advanced, 4th generation mobile communication system (4G), 5th generation mobile communication system (5G), 6th generation mobile communication system (6G), x-th generation mobile communication system (xG) (xG (x is, for example, an integer or a decimal)), future radio access (FRA), new radio (NR), new radio access (NX), future generation radio access (FX), W-CDMA (registered trademark), GSM (registered trademark), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), and other appropriate systems, and a next generation system which is extended, modified, generated, and specified based thereon. Further, a plurality of systems may be applied in combination (for example, a combination of at least one of LTE and LTE-A and 5G, and the like).

The order of the processing procedure, sequence, flowchart, and the like of each aspect/embodiment described in the present specification may be changed as long as there is no contradiction. For example, for the method described in the present disclosure, elements of various steps are presented using an example order, and are not limited to the presented particular order.

The specific operation described as being performed by the base station 10 in the present specification may be performed by an upper node thereof in some cases. In a network including one or more network nodes including the base station 10, it is obvious that various operations performed for communication with the terminal 20 may be performed by at least one of the base station 10 and other network nodes (for example, MME, S-GW, or the like is conceivable, but the present invention is not limited thereto) other than the base station 10. Although a description has been given as to a case in which there is one other network node other than the base station 10, the other network node may be a combination of a plurality of other network nodes (for example, MME and S-GW).

Information, a signal, or the like described in the present disclosure can be output from an upper layer (or a lower layer) to a lower layer (or an upper layer). Input and output may be performed via a plurality of network nodes.

The input/output information and the like may be stored in a specific location (for example, in a memory) or may be managed using a management table. The input/output information and the like can be overwritten, updated, or additionally written. The output information and the like may be deleted. The input information and the like may be transmitted to another device.

The determination in the present disclosure may be made by a value represented by one bit (0 or 1), may be made by a true/false value (Boolean: true or false), or may be made by comparison of numerical values (for example, comparison with a predetermined value).

Software, whether referred to as software, firmware, middleware, microcode, hardware description language, or other names, should be construed broadly to mean an instruction, an instruction set, a code, a code segment, a program code, a program, a subprogram, a software module, an application, a software application, a software package, a routine, a subroutine, an object, an executable file, an execution thread, a procedure, a function, and the like.

In addition, software, instructions, information, and the like may be transmitted and received via a transmission medium. For example, when software is transmitted from a website, a server, or other remote sources using at least one of a wired technology (a coaxial cable, an optical fiber cable, a twisted pair, a digital subscriber line (DSL), or the like) and a wireless technology (infrared rays, microwaves, or the like), at least one of the wired and wireless technologies is included within the definition of the transmission medium.

Information, signals, and the like described in the present disclosure may be represented using any one of a variety of different techniques. For example, data, an instruction, a command, information, a signal, a bit, a symbol, a chip, and the like which may be mentioned throughout the above description may be represented by a voltage, a current, an electromagnetic wave, a magnetic field or a particle, an optical field or a photon, or any combination thereof.

Note that the terms described in the present disclosure and the terms necessary for understanding the present disclosure may be replaced with terms having the same or similar meanings. For example, at least one of the channel and the symbol may be a signal (signaling). The signal may also be a message. In addition, a component carrier (CC) may be referred to as a carrier frequency, a cell, a frequency carrier, or the like.

The terms "system" and "network" used in the present disclosure are used interchangeably.

In addition, information, parameters, and the like described in the present disclosure may be represented using an absolute value, may be represented using a relative value from a predetermined value, or may be represented using another piece of corresponding information. For example, a radio resource may be indicated by an index.

The names used for parameters described above are not limitative names in any way. Furthermore, mathematical formulas and the like using the parameters may be different from those explicitly disclosed in the present disclosure. Since various channels (for example, PUCCH, PDCCH, and the like) and information elements can be identified by any suitable names, various names assigned to the various channels and information elements are not limitative names in any way.

In the present disclosure, terms such as "base station (BS)", "radio base station", "base station", "fixed station", "NodeB", "eNodeB (eNB)", "gNodeB (gNB)", "access point", "transmission point", "reception point", "transmission/reception point", "cell", "sector", "cell group", "carrier", and "component carrier" can be used interchangeably. The base station may also be referred to as a macro cell, a small cell, a femto cell, a pico cell, or the like.

The base station may accommodate one or more (for example, three) cells. When the base station accommodates a plurality of cells, an entire coverage area of the base station may be divided into a plurality of smaller areas, and each smaller area may also provide a communication service by a base station subsystem (for example, a small base station for indoor use (remote radio head (RRH)). The term "cell" or "sector" refers to a part or the whole of a coverage area of at least one of the base station and the base station subsystem that performs communication service in the coverage.

In the present disclosure, when a base station transmits information to a terminal, this may be interpreted to mean that the base station controls or send a command to the terminal based on the information.

In the present disclosure, terms such as "mobile station (MS)", "user terminal", "user equipment (UE)", and "terminal" can be used interchangeably.

The mobile station may also be referred to, by those skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of the base station and the mobile station may be also referred to as a "transmission device," a "receiving device," a "communication device," or the like. At least one of the base station and the mobile station may be a device installed in a mobile entity, a mobile entity itself, or the like. The mobile entity refers to a movable object, and its speed of movement may be determined at its discretion. It also naturally includes the case where the mobile entity is stationary. Examples of the mobile entity include, but are not limited to, a vehicle, a transport vehicle, an automobile, a motorcycle, a bicycle, a connected car, an excavator, a bulldozer, a wheel loader, a dump truck, a forklift, a train, a bus, a handcart, a rickshaw, a ship and other watercraft, airplanes, a rocket, an artificial satellite, a drone (registered trademark), a multicopter, a quadcopter, a balloon, and objects mounted on these. The mobile entity may also be a mobile entity that travels autonomously based on operation commands. The mobile object may be a vehicle (for example, a car, an airplane, or the like), a mobile object which is movable without human intervention (for example, a drone, a self-driving vehicle, or the like), or a robot (manned type or unmanned type). Note that at least one of the base station and the mobile station includes a device which does not necessarily move during communication operation. For example, at least one of the base station and the mobile station may be an Internet of Things (IoT) device such as a sensor.

In addition, the base station in the present disclosure may be replaced with the user terminal. For example, each aspect/embodiment of the present disclosure may be applied to a configuration in which communication between the base station and the user terminal is replaced with communication between a plurality of terminals 20 (for example, may be referred to as device-to-device (D2D), vehicle-to-everything (V2X), or the like). Here, the terminal 20 may have a function of the base station 10 described above. In addition, words such as "upstream" and "downstream" may be replaced with words corresponding to device-to-device communication (for example, "side"). For example, an uplink channel, a downlink channel, and the like may be replaced with a side channel.

Similarly, the user terminal in the present disclosure may be replaced with the base station. Here, the base station may have a function of the user terminal described above.

The terms "deciding" and "determining" used in the present disclosure may encompass a wide variety of actions. The terms "deciding" and "determining" may include considering, as "deciding" and "determining", what has been obtained by, for example, judging, calculating, computing, processing, deriving, investigating, searching (looking up, search, inquiry) (for example, searching in a table, a database, or another data structure), and ascertaining. Furthermore, "deciding" and "determining" may include considering, as "deciding" and "determining", what has been obtained by receiving (for example, receiving information), transmitting (for example, transmitting information), inputting, outputting, and accessing (for example, accessing data in a memory). In addition, "deciding" and "determining" may include considering, as "deciding" and "determining", what has been obtained by resolving, selecting, choosing, establishing, comparing, and the like. That is, "deciding" and "determining" may include considering some operations as "deciding", and "determining". Further, "deciding (determining)" may be replaced with "assuming", "expecting", "considering", or the like.

The terms "connected", "coupled", or any variation thereof mean any direct or indirect connection or coupling between two or more elements, and one or more intermediate elements may exist between two elements which are "connected" or "coupled" to each other. The coupling or connection between the elements may be physical, logical, or a combination thereof. For example, "connection" may be replaced with "access". As used in the disclosure, two elements can be considered to be "connected" or "coupled" to each other using at least one of one or more wires, cables, and printed electric connections, and as some non-limiting and non-inclusive examples, using electromagnetic energy having wavelengths in a radio frequency domain, a microwave region, and a light (both visible and invisible) region, and the like.

The reference signal may be abbreviated as RS, or may be referred to as a pilot according to an applied standard.

As used in the disclosure, the phrase "based on" does not mean "based only on", unless explicitly stated otherwise. In other words, the description "based on" means both "based only on" and "based at least on".

Any reference to elements using designations such as "first", "second", and the like as used in the present disclosure does not generally limit the amount or order of the elements. Such designations may be used in the present disclosure as a convenient way to distinguish between two or more elements. Thus, references to first and second elements do not imply that only two elements may be employed or that the first element must in any way precede the second element.

The "means" in the configuration of each device described above may be replaced with a "unit", a "circuit", a "device", or the like.

When the present disclosure uses the terms "include", "including", and variations thereof, the terms are intended to be inclusive in a manner similar to the term "comprising". Furthermore, the term "or" used in the present disclosure is intended not to be an exclusive OR.

A radio frame may be configured with one or more frames in a time domain. Each of one or more frames in the time domain may be referred to as a sub-frame. The sub-frame may be further configured with one or more slots in the time domain. The sub-frame may be a fixed time length (for example, 1 ms) which is independent of numerology.

The numerology may be a communication parameter applied to at least one of transmission and reception of a signal or a channel. The numerology may indicate at least one of, for example, a sub-carrier spacing (SCS), a bandwidth, a symbol length, a cyclic prefix length, a transmission time interval (TTI), the number of symbols per TTI, a radio frame configuration, a particular filtering operation performed by a transceiver in the frequency domain, a particular windowing operation performed by the transceiver in the time domain, and the like.

The slot may be configured with one or a plurality of symbols (an orthogonal frequency division multiplexing (OFDM) symbol, a single carrier frequency division multiple access (SC-FDMA) symbol, and the like) in the time domain. The slot may be a time unit based on the numerology.

The slot may include a plurality of mini-slots. Each mini-slot may be configured with one or more symbols in the time domain. Further, the mini-slot may be referred to as a sub-slot. The mini-slot may be configured with a smaller number of symbols than the slot. PDSCH (or PUSCH) transmitted in a time unit larger than the mini-slot may be referred to as a PDSCH (or PUSCH) mapping type A. PDSCH (or PUSCH) transmitted using the mini-slot may be referred to as a PDSCH (or PUSCH) mapping type B.

Each of the radio frame, the sub-frame, the slot, the mini-slot, and the symbol represents a time unit when a signal is transmitted. Different names respectively corresponding to the radio frame, the sub-frame, the slot, the mini-slot, and the symbol may be used.

For example, one sub-frame may be referred to as a transmission time interval (TTI), a plurality of consecutive sub-frames may be referred to as a TTI, and one slot or one mini-slot may be referred to as a TTI. That is, at least one of the sub-frame and the TTI may be a sub-frame (1 ms) in existing LTE, a period shorter than 1 ms (for example, 1 to 13 symbols), or a period longer than 1 ms. Note that the unit representing the TTI may be referred to as the slot, the mini-slot, or the like instead of the sub-frame.

Here, the TTI refers to, for example, a minimum time unit of scheduling in wireless communication. For example, in the LTE system, the base station performs scheduling of allocating radio resources (frequency bandwidth, transmission power, and the like that can be used in each terminal 20) to each terminal 20 in units of TTIs. Note that the definition of the TTI is not limited thereto.

The TTI may be a transmission time unit such as a channel coded data packet (a transport block), a code block, or a code word, or may be a processing unit such as scheduling or link adaptation. Note that, when a TTI is given, a time interval (for example, the number of symbols) in which the transport block, the code block, the code word, or the like is actually mapped may be shorter than the TTI.

Note that, when one slot or one mini-slot is referred to as the TTI, one or more TTIs (that is, one or more slots or one or more mini-slots) may be the minimum time unit of scheduling. Furthermore, the number of slots (the number of mini-slots) configuring the minimum time unit of the scheduling may be controlled.

A TTI with a time length of 1 ms may be referred to as a general TTI (TTI in LTE Rel. 8 to 12), a normal TTI, a long TTI, a general sub-frame, a normal sub-frame, a long sub-frame, a slot, or the like. A TTI shorter than the general TTI may be referred to as a shortened TTI, a short TTI, a partial TTI (or fractional TTI), a shortened sub-frame, a short sub-frame, a mini-slot, a sub-slot, a slot, or the like.

Note that the long TTI (for example, the general TTI, the sub-frame, or the like) may be replaced with a TTI having a time length exceeding 1 ms, and the short TTI (for example, the shortened TTI or the like) may be replaced with a TTI having a TTI length less than the TTI length of the long TTI and a length of 1 ms or more.

The resource block (RB) is a resource allocation unit in the time domain and the frequency domain, and may include one or a plurality of consecutive sub-carriers in the frequency domain. The number of sub-carriers included in the RB may be the same regardless of the numerology, and for example, may be 12. The number of sub-carriers included in the RB may be determined based on the numerology.

In addition, the time domain of the RB may include one or more symbols, and may be a length of one slot, one mini-slot, one sub-frame, or one TTI. Each of one TTI, one sub-frame, and the like may be configured with one or more resource blocks.

Note that one or a plurality of RBs may be referred to as a physical resource block (PRB), a sub-carrier group (SCG), a resource element group (REG), a PRB pair, an RB pair, or the like.

Furthermore, the resource block may include one or a plurality of resource elements (REs). For example, one RE may be a radio resource area of one sub-carrier and one symbol.

A bandwidth part (BWP) (which may also be referred to as partial bandwidth or the like) may represent a subset of contiguous common resource blocks (common RBs) for a numerology in a carrier. Here, the common RB may be specified by an index of the RB based on the common reference point of the carrier. The PRB may be defined by a certain BWP and numbered within the BWP.

The BWP may include a BWP for UL (UL BWP) and a BWP for DL (DL BWP). One or a plurality of BWPs may be set in one carrier for the terminal 20.

At least one of the set BWPs may be active, and the terminal 20 may not assume that a predetermined signal/channel is transmitted and received outside the active BWPs. Note that a "cell", a "carrier", and the like in the present disclosure may be replaced with "BWP".

The above-described structures such as the radio frame, the sub-frame, the slot, the mini-slot, and the symbol are merely examples. For example, the number of sub-frames included in the radio frame, the number of slots per subframe or radio frame, the number of mini-slots included in the slot, the number of symbols and RBs included in the slot or the mini-slot, the number of sub-carriers included in the RB, the number of symbols in the TTI, a symbol length, a cyclic prefix (CP) length, and the like can be variously changed.

In the present disclosure, for example, when articles such as a, an, and the in English are added by translation, the present disclosure may include a case in which a noun following the articles is a plural form.

In the present disclosure, the term "A and B are different" may mean "A and B are different from each other". Note that the term may mean that "A and B are different from C". Terms such as "separated" and "coupled" may be interpreted in the same manner as "different".

Each aspect/embodiment described in the present disclosure may be used alone, used in combination, or used by being switched with execution. Furthermore, indication of predetermined information (for example, indication of "being X") is not limited to being performed explicitly, and may be performed implicitly (for example, the predetermined information is not indicated).

Although the present disclosure has been described in detail above, it is apparent to those skilled in the art that the present disclosure is not limited to the embodiments described in the present disclosure. The present disclosure can be implemented as modifications and variations without departing from the spirit and scope of the present disclosure defined by the claims. Therefore, description of the present disclosure is given for the purpose of illustration and does not have any restrictive meaning to the present disclosure.

Reference Signs List

| | |
|---|---|
| 10 | base station |
| 110 | transmission unit |
| 120 | reception unit |
| 130 | configuration unit |
| 140 | control unit |
| 20 | terminal |
| 210 | transmission unit |
| 220 | reception unit |
| 230 | configuration unit |
| 240 | control unit |
| 1001 | processor |
| 1002 | storage device |
| 1003 | auxiliary storage device |
| 1004 | communication device |

1005 input device
1006 output device
2001 vehicle
2002 drive unit
2003 steering unit
2004 accelerator pedal
2005 brake pedal
2006 shift lever
2007 front wheel
2008 rear wheel
2009 axle
2010 electronic control unit
2012 information service unit
2013 communication module
2021 current sensor
2022 rotation speed sensor
2023 air pressure sensor
2024 vehicle speed sensor
2025 acceleration sensor
2026 brake pedal sensor
2027 shift lever sensor
2028 object detection sensor
2029 accelerator pedal sensor
2030 driving assistance system unit
2031 microprocessor
2032 memory (ROM, RAM)
2033 communication port (IO port)

**Claims**

**1.** A terminal comprising:

a receiving unit configured to perform sensing in a resource pool that is set in an unlicensed band;
a control unit configured to select a resource based on a result of the sensing and carry out a channel access procedure for a band in which the selected resource is included; and
a transmitting unit configured to carry out a transmission to another terminal in the selected resource when the channel access procedure is carried out successfully,
wherein the transmitting unit carries out the transmission in a gap symbol at an end of an earlier slot among at least two contiguous slots included in the selected resource.

**2.** The terminal according to claim 1, wherein the transmitting unit transmits, in the gap symbol, part or all of a signal to be transmitted in a symbol included in the earlier slot or a later slot among the two contiguous slots.

**3.** The terminal according to claim 2, wherein the transmitting unit transmits, in the gap symbol, a signal of an extended part of a cyclic prefix (CP), the cyclic prefix being a cyclic prefix of a signal transmitted in a first symbol of the later slot.

**4.** The terminal according to claim 1, wherein when, after the earlier slot is scheduled, a later slot among the two contiguous slots is scheduled at a time prior to the earlier slot, the transmitting unit performs the transmission in the gap symbol at the end of the earlier slot.

**5.** The terminal according to claim 1, wherein the control unit selects the resource such that contiguous slots are provided.

**6.** A communication method implemented by a terminal, the communication method comprising:

a receiving step of performing sensing in a resource pool that is set in an unlicensed band;
a control step of selecting a resource based on a result of the sensing and carrying out a channel access procedure for a band in which the selected resource is included; and

a transmitting step of carrying out a transmission to another terminal in the selected resource when the channel access procedure is carried out successfully,
wherein, among at least two contiguous slots included in the selected resource, the transmission is carried out in a gap symbol at an end of an earlier slot.

FIG.1

V2V
(Vehicle to Vehicle)
V2I
(Vehicle to Infrastructure)
Road side unit (RSU)
V2N
(Vehicle to Network)
ITS server
V2P
(Vehicle to Pedestrian)

FIG.2

FR1
{15, 30, 60} kHz SCS
5～100 MHz BW
FR2
{60, 120, (240)}
kHz SCS
50～400 MHz BW
Above 52.6 GHz
FREQUENCY
0.41 GHz
1 GHz
7.125 GHz
10 GHz
24.25 GHz
52.6 GHz
71 GHz

FIG.3
SENSING SLOT (e.g., 9 μs)
DEFER DURATION (e.g., 43 μs)
IF ERROR DUE TO COLLISION IS DETECTED, CONTENTION WINDOW SIZE IS EXPANDED
NR-U gNB
6 5 4 3 2 1 0
3 2 1 0
13 13
TIME
WIRELESS LAN NODE #1
10 9 8 7 6 5 4 4
4 3 2 1 1
0
TIME
WIRELESS LAN NODE #2
9 8 7 6 5 4 3 3
3 2 1 0
7 7
TIME
BACK-OFF COUNTER IS FIXED DURING CHANNEL-BUSY STATE
NR-U TRANSMISSION
WIRELESS LAN TRANSMISSION
LBT BUSY
LBT IDLE

# FIG.4

ANOTHER TRANSMISSION
TRANSMISSION
TIME
GAP OF 16 μs OR 25 μs
FOR POWER DETECTION

# FIG.5

MAXIMUM 584 μs
ANOTHER TRANSMISSION
TRANSMISSION
TIME
GAP NOT EXCEEDING 16 μs
WITHOUT POWER DETECTION

FIG.6

PDCCH
Multi-TTI grant
t
A
B
C
D
PUSCH
PUSCH
PUSCH
PUSCH
LBT
OK
Transmit 4 PUSCHs
NG
LBT
OK
Transmit 3 PUSCHs
NG
LBT
OK
Transmit 2 PUSCHs
NG
LBT
OK
Transmit 1 PUSCH
NG
No transmission

RESOURCE WHERE SCI IS DETECTED AND WHERE RSRP EXCEEDS THRESHOLD
EXCLUDED RESOURCE
RESOURCE WHERE SCI IS DETECTED AND WHERE RSRP IS BELOW THRESHOLD
RESOURCE WHERE CANDIDATE BASED ON RESOURCE RESERVATION FIELD IS EXCLUDED BECAUSE RESOURCE IN SENSING WINDOW IS NOT MONITORED
RESOURCE NOT MONITORED (FOR EXAMPLE, DUE TO TRANSMISSION)
RESOURCE NOT EXCLUDED BECAUSE RSRP OF RESOURCE OF SENSING WINDOW IS BELOW THRESHOLD
SELECTED RESOURCE
RESOURCE CANDIDATE
1 CYCLE（10240 ms）
SENSING WINDOW
RESOURCE SELECTION WINDOW
RESOURCE POOL
SUBCHANNEL
PRIORITY
$p_{TX}$
TRIGGER
TRANSMISSION OF PRIORITY $p_{RX}$ OF ANOTHER UE
SLOT
$t_0^{SL}$
$n - T_0$
$t_m^{SL}$
$n - T_{proc,0}$
$n$
$n + T_1$
$n + T_2$
$t_{T_{max}-1}^{SL}$
PERFORM LBT IN LBT BAND INCLUDING SELECTED RESOURCE


FIG.7

FIG.8

1st-stage SCI (PSCCH)
2nd-stage SCI (PSSCH)
DMRS
SL-SCH (PSSCH)
2 OR 3
SYMBOLS
{10, 12, 15, 20, 25} PRBs
SUB-
CARRIER
SUB-
CARRIER
PRB
SUB-
CHANNEL
SLOT
COPY
FOR AGC
SYMBOL
GAP FOR
SWITCHING
TRANSMISSION
AND RECEPTION

FIG.9
10
1. SL SCHEDULING
2. SL TRANSMISSION
20A
20B
DL/UL
PDCCH
SL SCHEDULING
PROCESSING TIME
SL
PSCCH
PSSCH
SLOT
SUBCHANNEL

# FIG.10

| DCI format 3_0 | |
|---|---|
| Resource pool index | INFORMATION SHOWING SCHEDULED RESOURCES |
| Time gap (PDCCH to PSCCH/PSSCH) | |
| Lowest sub-ch. index of the initial TX | |
| Freq. resource | |
| Time resource | |
| HARQ process ID | CONTROL RELATED TO INITIAL TRANSMISSION/ RETRANSMISSION |
| New data indicator | |
| PSFCH-to-HARQ feedback timing indicator | INFORMATION RELATED TO FEEDBACK |
| PUCCH resource indicator | |
| Counter SAI | |
| Configuration index (for CG) | |

# FIG.11

SLOT
RESERVATION
SUBCHANNEL
SINGLE TRANSMISSION
OFFSET: 1 TO 31 SLOTS

FIG.12

RESERVATION
CYCLE: 0, 1:99, 100, 200, 300, 400, 500,
600, 700, 800, 900, 1000 ms
SINGLE
TRANSMISSION
TIME

FIG.13

START
SIDELINK RESOURCE ALLOCATION
S1
EXECUTE SENSING AND RESOURCE SELECTION PROCEDURES
S2
EXECUTE CHANNEL ACCESS PROCEDURES WITH RESPECT TO BAND THAT MATCHES SELECTED RESOURCE
S3
END

| SCS [kHz] | SLOT [μs] | SYMBOL [μs] |
|---|---|---|
| 15 | 1000 | 71.428571 |
| 30 | 500 | 35.714286 |
| 60 | 250 | 17.857143 |


1st-stage SCI (PSCCH)
2nd-stage SCI (PSSCH)
DMRS
SL-SCH (PSSCH)
2 OR 3 SYMBOLS
{10, 12, 15, 20, 25} PRBs
RESERVATION
SLOT
PRB
SUB-CHANNEL
SINGLE TRANSMISSION
SUB-CHANNEL
COPY FOR AGC
SYMBOL
GAP FOR SWITCHING TRANSMISSION AND RECEPTION
COPY FOR AGC
GAP FOR SWITCHING TRANSMISSION AND RECEPTION


FIG.14

FIG.15

PSCCH
PSSCH
GAP
SYMBOL

FIG.16

PSCCH
PSSCH
GAP

SYMBOL

# FIG.17

10
110
TRANSMITTING UNIT
120
RECEIVING UNIT
130
CONFIGURATION UNIT
140
CONTROL UNIT

# FIG.18

20
210
TRANSMITTING UNIT
220
RECEIVING UNIT
230
CONFIGURATION UNIT
240
CONTROL UNIT

FIG.19

10, 20
1001
PROCESSOR
1007
1004
COMMUNICATION DEVICE
1002
STORAGE DEVICE
1005
INPUT DEVICE
1003
SECONDARY STORAGE DEVICE
1006
OUTPUT DEVICE

FIG.20

2001
2012
2023
2007
2023
2008
2004
2029
2010
2003
2030
2026
2005
2027
2031
2002
2006
2032
2022, 2024, 2025
2022, 2024, 2025
2009
2033
2021
2028
2013
2023
2007
2023
2008

**INTERNATIONAL SEARCH REPORT**

International application No. **PCT/JP2022/018231**

**A. CLASSIFICATION OF SUBJECT MATTER**

***H04W 92/18***(2009.01)i; ***H04W 76/14***(2018.01)i
FI: H04W92/18; H04W76/14

According to International Patent Classification (IPC) or to both national classification and IPC

**B. FIELDS SEARCHED**

Minimum documentation searched (classification system followed by classification symbols)

H04W92/18; H04W76/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | US 2020/0351669 A1 (SONY CORPORATION) 05 November 2020 (2020-11-05) paragraphs [0075], [0136], [0165]-[0166] | 1-6 |
| Y | ZTE CORPORATION. Discussion on unlicensed band URLLC/IIoT [online]. 3GPP TSG RAN WG1 #106-e R1-2106736. 07 August 2021 chapter 3 | 1-6 |
| A | ERICSSON. Corrections of the semi-static channel access mode with UE initiating channel occupancy [online]. 3GPP TSG RAN WG1 #108-e R1-2202957. 13 March 2022 section 4.3.1.2.4.1 | 1-6 |
| A | US 2020/0322974 A1 (WILUS INSTITUTE OF STANDARDS AND TECHNOLOGY INC.) 08 October 2020 (2020-10-08) paragraph [0384] | 1-6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 October 2022** | **18 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/018231**

| Patent document cited in search report | Publication date (day/month/year) | Patent family member(s) | Publication date (day/month/year) |
|---|---|---|---|
| US 2020/0351669 A1 | 05 November 2020 | WO 2019/214544 A1 | |
| | | EP 3783980 A1 | |
| | | CN 110475343 A | |
| US 2020/0322974 A1 | 08 October 2020 | EP 3435580 A1 | |
| | | KR 10-2018-0120202 A | |
| | | CN 109155720 A | |
| | | WO 2017/164719 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *3GPP TS 38.211 V16.8.0*, December 2021
- *3GPP TR 22.886 V15.1.0*, March 2017
- *3GPP TS 38.306 V16.7.0*, December 2021
- *3GPP TS 37.213 V16.7.0*, December 2021